Europäisches Patentamt

European Patent Office

Office européen des brevets

(19)

(11) **EP 1 091 506 A2**

(12) **EUROPEAN PATENT APPLICATION**

(43) Date of publication:
**11.04.2001 Bulletin 2001/15**

(51) Int. Cl.[7]: **H04B 7/185**

(21) Application number: **00810686.6**

(22) Date of filing: **31.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **01.10.1999 EP 99810890**

(71) Applicant: **Ascom Systec AG**
**5506 Mägenwil (CH)**

(72) Inventor: **Widmer, Hanspeter**
**5507 Mellingen (CH)**

(74) Representative:
**Roshardt, Werner Alfred, Dipl.-Phys. et al**
**Keller & Partner**
**Patentanwälte AG**
**Schmiedenplatz 5**
**Postfach**
**3000 Bern 7 (CH)**

(54) **A hybrid CDMA and TDMA radio access scheme for personal satellite communication systems**

(57)     To accomplish the object of high user capacity and high power efficiency, the invention is characterized in that the base station transmits control information in the forward link to each of the at least one user terminals for enabling the user terminal to transmit its signals in the return link in a mode to reach signal arrival at the base station that is quasi-synchronous with respect to the time and frequency reference in the base station.

Fig. 9-1

EP 1 091 506 A2

## Description

### Technical field

The invention relates to a satellite communication system designed as subsystem of a universal mobile telecommunication system (UMTS). More particularly, the invention refers to a process for providing communication in a satellite system comprising at least one satellite with at least one service beam for radio communication between a base station and at least one terrestrial user terminal, said satellite transmitting base station signals in a forward link to said at least one user terminal and said user terminal transmitting user terminal signals in a return link to said base station via said satellite. The invention also relates to a satellite communication system and a user terminal.

### Background of the invention

There is a strong movement to establish a universal mobile telecommunication system (UMTS). This movement will constitute an important driver to orientate a corresponding choice for a third generation satellite system. The rationale behind a satellite component of UMTS is a universal standard making dual mode user terminals more compact and cost-effective but also extending the large variety of UMTS services to the space segment.

Satellite communication is known in the art. However, no satellite UMTS has yet been implemented that is available to the general public.

### Summary of the invention

It is an object of the invention to provide a process as defined in the introductory part which is applicable to any satellite communication system with known orbit and constellation types (LEO, Ellipso, MEO, HEO, GEO).

It is another object to provide a process optimized for high user capacity and high power efficiency mainly in a single satellite coverage HEO or GEO system.

It is another object of the invention to propose a process for a satellite communication system with a paging procedure with high in-building penetration effect.

To accomplish the object of high user capacity and high power efficiency, the invention is characterized in that the base station transmits control information in the forward link to each of the at least one user terminals for enabling the user terminal to transmit its signals in the return link in a mode to reach signal arrival at the satellite that is quasi-synchronous with respect to time and frequency reference in the base station enabling a quasi-orthogonal code and time division multiple access. (The time and frequency reference is generated by a circuit in the base station.)

The advantage of a quasi-synchronous return link is that orthogonal channelization codes may be applied on the return link minimizing multiple-access interference in a conventional CDMA receiver without special interference mitigating techniques. Minimization of multiple access interference is a mean to increase system user capacity and power efficiency.

A further advantage of a quasi-synchronous return link is that multiple access interference, produced by non-orthogonal signals of user terminals belonging to other orthogonal code groups but operating via the same satellite is quasi-synchronous. This may simplify interbeam interference mitigation in a non-conventional more sophisticated CDMA receiver.

Another advantage is that additional time division multiple access can be supported in the return link although this does not demand high synchronization accuracy.

It is to be noted that said satellite may be a two way linear transponder performing amplification and frequency conversion of the received forward and return link signal or a satellite with on-board processing where the base station may be located in the satellite. If the base station is not on board of the satellite and the satellite is transparent with respect to signaling the arrival time of the user terminal signals can be determined also with respect to the base station.

When a communication channel has been established between the user terminal and the base station, carrier frequency and transmit time synchronization of the return link is maintained by the control information sent back from the base station to the user terminal in a user dedicated control channel. Said information comprises on one hand frequency correction data enabling the user terminal to adjust its carrier frequency as well as its chip clock frequency and on the other hand time correction data for controlling the time phase of the frame structure. Frequency and time synchronization is therefore achieved by means of a closed loop control circuit.

Each user terminal is controlled by dedicated control signals in such a way that the return link signals of different user terminals belonging to the same quasi-synchronous group (e.g. to the same service beam) arrive at the base station receiver in a quasi-synchronous mode. Return link signals of user terminals belonging to another quasi-synchronous group (e.g. of a different satellite), are generally speaking asynchronous at the base station receiver.

According to a preferred embodiment, all user terminals operating via the same primary satellite belong to the same synchronous group. This implies that return link signals received in different beams of the same primary satellite are mutually quasi-synchronous as observed in the receiver of the base station associated to that primary satellite, and furthermore, that all user terminals of said quasi-synchronous group are controlled by said base station. This is called inter-beam synchronism.

According to a preferred embodiment, interbeam decorrelation is simply accomplished by shifting the whole forward and return link frame structure of one beam relative to a neighboring beam by a few chip periods. The time offset of the frame structure may be a maximum of 16 chip periods.

Inter-beam synchronism avoids synchronization reacquisition in an intra satellite beam hand-off procedure, thus simplifying intra-satellite beam hand-off.

For simplifying satellite hand-off in a satellite system with a plurality of satellites the forward and return link frame structure as observed at the satellites is mutually partially-synchronous within a maximum tolerance range of 2 ms for all satellites belonging to the satellite system.

According to a preferred embodiment the frequency control is performed on the basis of a correction signal, which can assume only three different values: If the first value (e.g. "-1") is transmitted the carrier frequency generated in the user terminal has to be reduced by a predetermined step ($-\Delta$). If the second value (e.g. "0") is transmitted the carrier frequency can be kept constantly. Finally, if the third value (+1) is transmitted the carrier frequency generated in the user terminal has to be increased by the predetermined step ($+\Delta$). The control signal is so to speak a ternary data signal. It is also possible to omit the transmission of the second value and to transmit a correction signal only if a carrier frequency correction is required.

The base station transmits the first or the second value, whatever is needed, immediately after the carrier frequency as measured in the receiver of said base station has trespassed a defined tolerance limit, using the next opportunity to transmit a correction signal. The tolerance limit of the carrier frequency is preferably 0.05 ppm.

A similar type of control is used for adjusting the time phase of the chip clock. Therefore, the base station has to transmit (in the maximum) just two ternary data signals to enable the user terminal to maintain the quasi-synchronous state. The tolerance limit of the chip time is preferably 0.1 chip period.

Preferably, the period between consecutive correction signal transmissions is chosen larger than the maximum round trip delay as occurring in a satellite system.

The advantage of this preferred embodiment of the invention is that the synchronization data overhead in the forward link is kept low.

On reception of a correction signal, the user terminal accordingly corrects its carrier frequency and/or transmit time phase (whatever applies) of its next transmission but not before the start of a new time slot.

Preferably, the user terminal derives the chip clock and the carrier frequency from a common local frequency reference (i.e. a frequency or clock generator circuit) and corrects both the chip clock frequency and the carrier frequency by the same percentage. The impact of the Doppler effect on the chip clock frequency (i.e. the chip clock Doppler drift) will thus be compensated as well.

The time correction data is used only for compensating the residual transmit time drift to maintain synchronism of the frame structure down to the chip level. This is altogether a relatively simple solution to the Doppler effect problem that is present in satellite systems with non-geostationary satellites and/or with moving user terminals.

The control information is transmitted in a dedicated control channel during communication with the terminal.

In case of synchronization loss due to a blockage, the user terminal may send a synchronization reacquisition signal in the frame dedicated to initial access, if signal blockage does not exceed a certain time. This time-out shall guarantee that time synchronization is still sufficiently accurate to enable the user terminal to transmit the synchronization reacquisition burst such that it arrives within a constraint time interval located preferably at the edge of the frame dedicated to initial access.

The forward link multiplexing scheme is wideband code division multiplexing (W-CDM) while the return link access scheme is basically a wideband code division multiple access (W-CDMA). According to a preferred embodiment of the invention the forward and return link transmit signals are additionally organized in time using a time division multiplexing scheme and a time division multiple access scheme, respectively. Therefore, the forward link multiplexing scheme is designated as W-C/TDM (wideband code and time division multiplexing) and the return link access scheme is designated as W-C/TDMA (wideband code and time division multiple access). Base station and user terminals are equipped with appropriate circuits (which is as such known in the art.)

W-C/TDMA has the advantage to support frequency and time division duplexing (F/TDD) mode operation allowing for terminals that do not have high performing antenna diplexers. Power control instability (which is a potential danger for W-CDMA systems mainly in satellite application where speed and accuracy of power control is limited by large round trip delays) may be avoided. The reason is the orthogonal partitioning (Time Division Multiplexing, TDM) of a high percentage of radio resources.

W-C/TDMA has also several advantages over narrow-band FDMA or TDMA:

- A capacity analysis in a multi-beam-single-satellite scenario has shown that a W-C/TDMA system is superior to a narrow-band TDMA or FDMA system.

- There is the possibility of full frequency re-use simplifying frequency planning and avoiding dynamic frequency allocation.

- W-C/TDMA provides finer granularity of user data rates avoiding high peak-to-mean power ratios.

- W-C/TDMA is more suitable for ranging applications (localisation) because of the large spreading bandwidth if a time domain triangulation is to be implemented.

- Finally, W-C/TDMA is more suitable to support an efficient high penetration paging service due to the slotted structure.

The time of the communication system (i.e. of the base stations and the user terminals) is divided into a plurality of frames, each frame being divided into eight identical time slots. The duration of one frame corresponds to a value above the maximum round-trip delay variation experienced inside the coverage area of any beam of the satellite system. (All possible round-trip delay variations throughout the system are to be calculated or estimated for determining the frame duration.) This frame duration is suitable with respect to initial access transmissions, if one frame is devoted to initial access. An identical duration is chosen for all frames in a multi-frame providing a periodic frame structure.

Upon consideration of different satellite orbits and constellations, a frame duration of about 20 ms has shown to be suitable for all types of known satellite orbits (LEO, Ellipso, MEO, HEO, GEO) and constellations.

Nine frames may be combined to a multi-frame structure. Eight frames are used for dedicated communication channels. On the return link only quasi-synchronous operation is permitted in these frames. One frame serves as a special frame with different functions in the forward and the return link. The eight ordinary frames and the special frame therefore serve different purposes.

In the forward link, the special frame is primarily used for common and dedicated control channels and is therefore called control frame. In the return link the special frame serves for asynchronous traffic (e.g. initial or random access) and is therefore called asynchronous traffic frame. This special frame is not slotted in the return link.

It is of course also possible to use a different frame structure. The advantage of having eight frames for user communication is that there is a high flexibility with respect to implementing the different data rates required by UMTS services.

A user terminal without connection to the base station cannot know when to access the base station and how to pre-adjust its carrier frequency because it cannot know the exact path delay to the base station nor the Doppler frequency shift. (It is assumed that neither accurate information on the position of the user terminal, nor its velocity relative to the satellite, nor its carrier frequency error relative to the base stations reference is available in the system, neither in the user terminal nor at the base station site.)

According to a preferred embodiment the base station broadcasts synchronization information in the broadcast synchronization control channel in the control frame in each beam. Said information mainly consists of the path delay value and the Doppler frequency shift value with respect to a defined point inside the spot beam (e.g. beam center point of the beam area projected on the earth surface) which is specific to each satellite beam. Knowledge of the path delay value and the Doppler frequency shift valid e.g. at the beam center point is sufficient to enable the user terminal to access the base station inside the time period of the special frame and with a minimum of Doppler frequency shift.

When a communication channel has to be established between the user terminal and the base station, the base station first determines the exact path delay between user terminal and base station using an initial access signal sent by the user terminal. This is accomplished as follows:

Having detected the access signal, the base station measures the effective time of arrival of the access signal relative to its local time reference. To determine the path delay, the base station takes into account the path delay information (valid e.g. for the beam center point) transmitted in the broadcast synchronization control channel.

The base station also measures the carrier frequency error relative to its local frequency reference.

Once knowing said path delay and said carrier frequency error, the base station sends initial time and frequency correction data together with channel assignment data to the user terminal in a dedicated control channel. After having received said data, a user terminal is able to enter into the quasi-synchronous state.

The base station uses the special frame in the forward link for control channels, in particular for common control channels, dedicated slow associated control channels. Preferably, the forward link control frame is not only used for control channels but also for user addressed packet mode data services and any non-time critical service, such as short message services. Such a service may use radio resources that are not used for control. That means that the base station is constructed in such a way that free transmission capacity in the forward link control frame may be used if desired for said communication services. The user terminal uses the special frame in the return link to transmit asynchronous signals such as initial access signals, synchronization reacquisition signals, and connection-less packet mode data signals.

The user terminal delays or advances its transmissions of an initial access signal or connection-less packet mode data signal in beams with lower round trip delay variations in a random manner to avoid multiple access interference hot spots in the special frame. Said time offset is indicated in said data signals to be taken into account when computing the round trip delay in the base station. Synchronization reacquisition signals are transmitted in the return link special frame. The timing of these signals is such that they arrive in edge zones of the special frame (i.e. at the beginning or at the end). This helps to minimize congestion.

The base station signals are generated according to an orthogonal code division multiplexing scheme. The user terminal signals in dedicated return link channels are organized according to a quasi-synchronous/quasi-orthogonal code division multiple access scheme. The user terminal signals in non-dedicated return link channels are organised according to an asynchronous code division multiple access scheme.

The invention proposes to use a set of binary orthogonal codes (Walsh-Hadamard-codes) for the code channelization on the forward link as well as for the quasi-synchronous return link.

According to a preferred embodiment, said set of orthogonal channelization codes is allocated to each beam of any satellite of the system.

In addition, a randomization code is applied to perform a noise-like spreading of the transmit signals and to decorrelate transmit signals of user terminals operating through adjacent beams and through co-coverage satellites, which may interfere with any desired receive signal in a receiver due to non-perfect antenna beam discrimination or satellite footprint (coverage area) overlapping.

According to a preferred embodiment, an identical randomization code is applied to all forward link transmissions of one satellite with the exception of the high penetration common control physical channel. Said randomization code is satellite specific.

According to a preferred embodiment, an identical randomization code is applied to all return link transmissions of one satellite. Said randomization code is satellite specific.

Different randomization codes are used by different satellites.

A non-satellite specific randomization code which is common to all satellites of the system is applied for the high penetration common control physical channel. This has the advantage that user terminals being in the initial acquisition phase or shadowed in buildings may search for a forward link signal without satellite specific information.

Decorrelation of interfering transmit signals of adjacent beams may be achieved by choosing time-shifted versions of the same randomization code (pseudo-random sequence) in the adjacent beams. It is possible to re use the same time shifts in a manner such that no two adjacent beams use the same time shift. This applies for the forward as well as for the return link. Preferably, the time shifts between the codes is smaller than 16 chip periods.

The duplexing method of the user terminal may be frequency division duplex (FDD), where simultaneous transmission and reception is allowed. (FDD is a requirement for user terminals capable to operate at higher data rates, where all slots of a frame have to be used.)

User terminals not capable to operate in FDD, will use F/TDD with limited data rates (e.g. handheld terminals). In F/TDD mode, transmission and reception of the user terminal is on different frequencies as well as spaced apart in time. F/TDD mode user terminals do not need bulky and expensive high performance diplexers. The F/TDD mode may be advantageous to support simultaneous communications with different satellites (ref. to secondary link maintenance) without the need to interrupt or to transmit two different signals simultaneously.

A preferred user terminal for the satellite system has a high power amplifier designed for the use in satellite discontinuous F/TDD mode with moderate requirements with respect to linearity but with high peak power. For continuous FDD mode with a terrestrial communication system the terminal works with relatively low average power but with high linearity in the amplification.

The time slots assigned to the forward link channel are separated by a predefined minimum time shift from the time slots assigned to the return link channel. This is important for maintaining orthogonality between transmit and receive time slots even if the separation may vary in time. The minimum time shift may correspond to one or several slot duration. It is determined depending on the drift velocity of the forward link time slots relative to the return link time slots and the transmit-receive switching speed of a particular user terminal. In order to avoid a time overlap ("collisions") of forward and return link time slots assigned to a user terminal, the system constantly monitors the space (= time difference) between said time slots. If the space decreases below the predefined minimum time shift, the system initiates a slot reassignment.

If a fast seamless hand-off is required from one satellite to another, it is advantageous, that the user terminal - while performing communication with a primary satellite - maintains an idling link to a secondary satellite of the satellite system for synchronization and power control purposes. This is performed by transmitting access bursts containing secondary link maintenance data to the base station associated with the secondary satellite from time to time in the asynchronous traffic frame. If communication with the primary satellite becomes poor or gets lost (blockage) a seamless hand-off to a secondary satellite may be executed without the need for a time consuming link set-up procedure. Having executed the hand-off successfully, the new satellite becomes the primary satellite.

In case the asynchronous traffic frame of the secondary satellite is highly congested, the system may renounce on secondary link maintenance.

Paging of user terminals inside the coverage area providing ordinary link margin is performed using the ordinary common control physical channel transmitted in the special frame. In general, a paging message comprises the address of the user terminals and a short message. A single randomization code is used for the high penetration paging channel transmission in all satellites of the satellite system.

If a user terminal is outside the coverage area providing ordinary link margin (e.g. inside a building) it might not be reached by the ordinary paging via the ordinary common control physical channel. The invention proposes therefore to transmit the paging message via a special high penetration common control physical channel providing higher link margin, and thus extended coverage.

The invention proposes to allocate the high penetration common control physical channel on at least one special slot in the control frame. A special slot is exclusively used by the high penetration common control physical channel. Thus, the total transmit power per beam is available for the high penetration common control channel in the special slots.

According to a preferred embodiment, there is one special slot per control frame. To enhance the penetration effect, the system may reserve four consecutive special slots in every 8th control frame.

To further enhance the penetration effect or as an alternative embodiment of the enhanced high penetration common control physical channel, the system may choose a portion of beams of a satellite in which the paging signal is simultaneously transmitted. This assumes that all special slots in all beams of a satellite are aligned within an accuracy of a few chips. In case of single beam paging, the total satellite power could be directed into a single beam during the special slot. Single or group beam paging may imply that all beams or groups of beams are successively used in a revolving manner.

If a user terminal is in standby mode outside the ordinary coverage of the system, it keeps monitoring the high penetration common control physical channel by evaluating the bursts transmitted in the special slots of the control frame.

If the increased link margin provided by the single slot high penetration common control channel is not sufficient, the user terminal may try to detect the information of the enhanced high penetration common control physical channel by using coherent combining of the signals transmitted in the four consecutive special slots in every 8th multiframe.

Preferably, said high penetration paging message is transmitted only in a subgroup of beams. A subgroup comprises at least one beam of a satellite. This enables to direct a big portion of the total satellite power into a small service area. If the user position is unknown different subgroups of beams are activated consecutively and or repeatedly (i.e. in a revolving manner).

The signal of the high penetration common control physical channel consists of a synchronization part and a data part. The synchronization part contains a synchronization word which is unique in the system and common to all beams of any satellite and to all satellites of the system. Said synchronization word may be used by all user terminals for the initial forward link signal acquisition.

The high penetration paging message is transmitted at least once each muti-frame. The transmission takes place at least in said predefined slot of the special frame and at least in said group of beams independent of a paging request.

If a user terminal does not respond after being paged via the ordinary paging channel, the system may attempt to reach this user terminal via the high penetration common control channel. If this attempt fails too, the system may use the enhanced high penetration common control channel.

If the position or a location area of a particular user terminal to be paged is known, the system may send the paging message through at least one satellite and at least one beam, the number of satellites and beams depending of the uncertainty of the user position.

Satellite macro path diversity reception may enhance the detection of the user terminal signal, thus increasing system user capacity and power efficiency. To exploit diversity on the return link, the base station combines the signal of a user terminal received via the primary satellite with the signal received via at least one secondary satellite. The BS (Base Station) performs quasi-coherent demodulation of each receive signal and combines the demodulated signals in the sense of maximal ratio combining. This means the demodulated receive signals are weighed according to their signal-to-noise/interference ratio prior to summation.

The use of satellite path diversity assumes that the base station controls the user terminal such that its signal received via the primary satellite is quasi-orthogonal relative to the receive signals of other user terminals assigned to the same beam of said primary satellite (quasi-orthogonal CDMA) and that its transmission is also received via at least one secondary satellite in general within a multitude of signals originating from other user terminals assigned to said primary or said secondary satellites, said signals being asynchronous to the signal of the desired user terminal (asynchronous CDMA).

The receive signals of other user terminals assigned to the same beam of the primary satellite (user group) are mutually quasi-synchronous and quasi-orthogonal, thus producing virtually no interference, while the receive signals of other user terminals assigned to a secondary satellite are asynchronous thus producing interference.

Intra-satellite beam diversity may enhance signal detection of user terminals located in the transition zone between adjacent beams where typically a loss in signal strength due to antenna gain roll-off is experienced. The gain achieved with intra-satellite beam diversity may partially compensate this loss. The base station may therefore combine the partially coherently demodulated signals received in at least two adjacent beams in the sense of maximal ratio combining. This means that the demodulated signals are weighed according to their signal-to-noise/interference ratio prior to summation.

A satellite communication system comprises in general a plurality of satellites circulating on orbits around the earth. Although the invention may perform optimum in a HEO or GEO system, its application is not limited to a particular type of orbit and constellation.

Each satellite defines at least one beam for transmitting radio signals in a forward link to said at least one user terminal and for receiving radio signals in a return link. There is a serving base station associated to each satellite. Said base station may be located in the satellite (on board processing) or on the ground (fixed earth station). In the latter case, said satellite is a two way linear transponder connected via a feeder link to said base station. If said base station is a fixed earth station and the orbits are non-geostationary, then the assignment of satellites to base station will be dynamic.

A base station may be connected to other co-coverage satellites via separate feeder links. These satellites are associated to other base stations, but may be used by said base station as supporting secondary satellites. The satellite associated to a base station is called the primary satellite.

The invention proposes to use a linear carrier modulation scheme resulting in a relatively low envelope fluctuation of the transmit signal for all return link transmissions. According to a preferred embodiment, the classical square root raised cosine filtered $\pi$/4-QPSK is chosen. Pilot symbols are inserted according to a time multiplexing scheme avoiding parallel code i.e. code multiplex transmission.

User terminals requiring higher power efficiency (e.g. hand held terminals) may use a non-linear approximation of said linear modulation scheme with a lower envelope fluctuation optimized with respect to unwanted adjacent channel emissions and demodulation loss.

The application of said non-linear modulation scheme assumes that the base station receiver does not adapt its demodulator. This means the same demodulator is used for the linear modulation scheme as well as for its non-linear approximation. Although some power is sacrificed in the demodulation loss, overall, a power efficiency gain is expected.

The communication system preferably supports frequency and time division duplexing (F/TDD) mode operation requiring user terminals with less performing antenna diplexers.

The invention proposes to use pilot symbols for all return link transmissions. Said pilot symbols are inserted into the stream of data symbols prior to modulation and may be used by the base station receiver to provide a carrier phase reference required for quasi-coherent demodulation as well as to provide channel state information required for optimum channel decoding.

Compared to other pilot transmission techniques using code multiplexing, time division multiplexing of data and pilot symbols may be advantages if a low envelope fluctuation of the transmit signal is demanded.

## Brief description of the drawings

Other characteristics and advantages of the invention shall appear from the following description of a preferred embodiment of the invention, given by way of a non-restrictive illustration, and from the appended drawings of which

Fig. 6-1    shows forward and return link frame structure;

Fig. 6-2    shows illustration of asynchronous return link traffic in frame #0;

Fig. 7-1    shows generic coding and multiplexing scheme of the dedicated physical channel. (Number of bits (dibits) indicate the bits (dibits) multiplexed in one burst and refer to the case of the 2 Mcps option, the big burst, and no FCH bit repetition. The DPCH symbol rate refers to a spreading factor of 32.);

Fig. 8-1    shows forward link generic spreader and modulator. (Rates indicated refer to the 2 Mcps option and a spreading factor of 32.);

Fig 8-2    shows return link generic spreader and modulator. (Rates indicated refer to the 2 Mcps option and a spreading factor of 32.);

Fig. 9-1    shows the use of synchronous and asynchronous CDMA for macro path diversity in a multiple-satellite scenario.

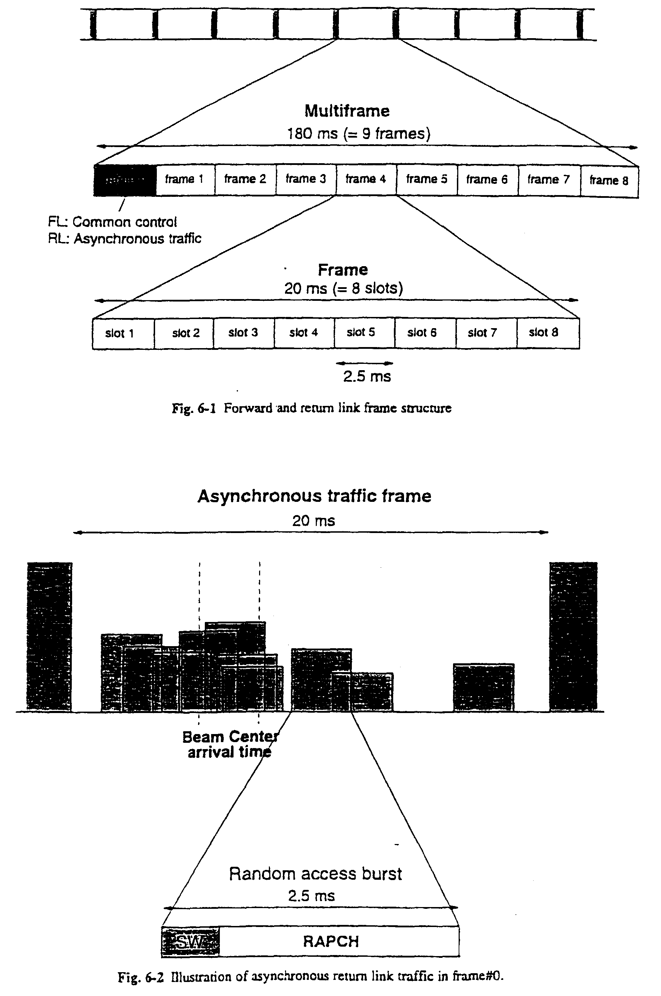

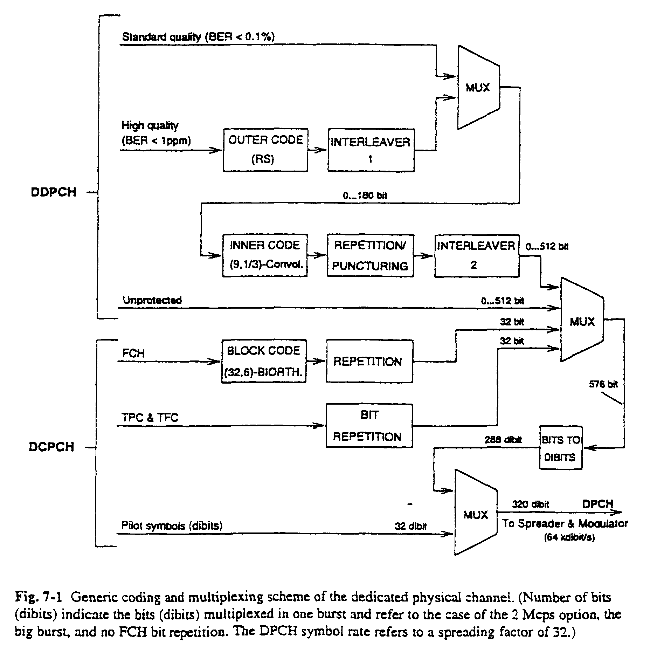

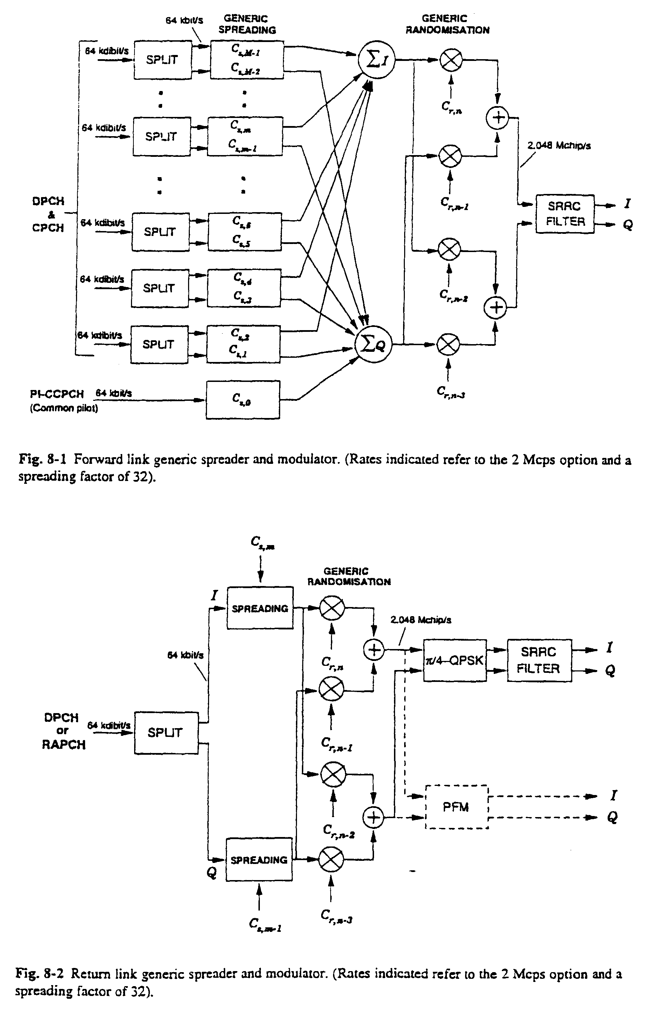

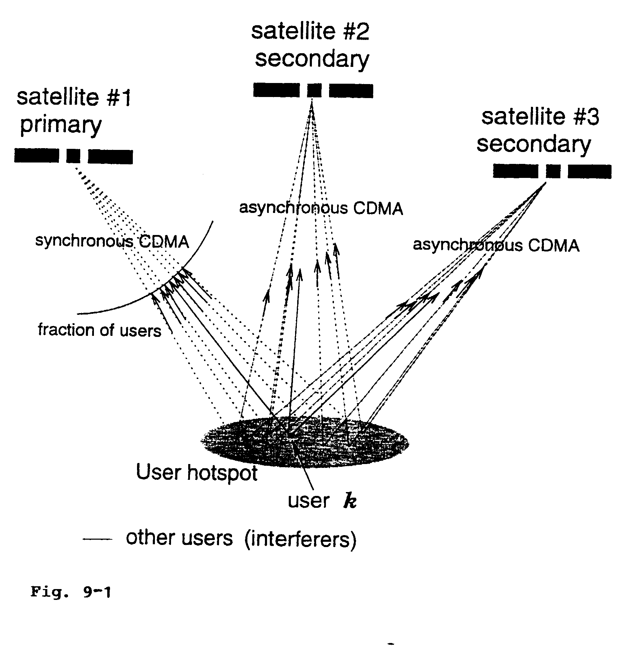

**Detailed description of preferred embodiments**

**1. Acronym Glossary and definitions**

The detailed description of the invention uses the following acronyms:

BCP          Beam Center Point
BER          Bit Error Rate
BPSK         Binary Phase Shift Keying
BS           Base Station
BW           Band Width
C/TDMA       Code- and Time Division Multiple Access
C/TDM        Code- and Time Division Multiplexing
DL           Down Link
FCH          Frame Control Header
FDD          Frequency Division Duplex
FDMA         Frequency Division Multiple Access
FL           Forward Link
FPLMTS       Future Public Land Mobile Telecommunications Systems
F/TDD        Frequency and Time Division Duplex
GEO          Geostationary Orbit
GF           Galois Field
GPS          Global Positioning System
HEO          Highly inclined Elliptical Orbit
HPA          High Power Amplifier
LEO          Low altitude Earth Orbit
MEO          Medium altitude Earth Orbit
MUX          Multiplexer
QPSK         Quarternary Phase Shift Keying
RL           Return Link
RS           Reed-Solomon code
SW           Synchronization Word
SRRC         Square Root Raised Cosine
S-UMTS       The Satellite Component of UMTS
SW           Synchronization Word
TDD          Time Division Duplex
TDMA         Time Division Multiple Access
TFC          Timing and Frequency Control
TPC          Transmit Power Control
T-UMTS       The Terrestrial Component of UMTS
UL           Up-link
UMTS         Universal Mobile Telecommunication System
USRAN        UMTS Satellite Radio Access Network
UT           User Terminal
W-O-C/TDM    Wideband Orthogonal-C/TDM
W-QO-C/TDMA  Wideband Quasi-Orthogonal-C/TDMA

In addition the following definitions are used:

Base station          the mobile serving station which generates the signals transmitted to the UT (forward link) and processes the signal received from the UT (return link). The BS may be the Gateway to a fixed network. The BS may be on-board the satellite (on-board processing payload) or in a fixed earth station (transparent payload).

Post-coding bit       binary symbol after channel encoding which is modulated onto the carrier

Dibit                 a two bit symbol

Feeder up-link        The BS to satellite link (in case of a linear transponder)

Feeder down-link      The satellite to BS link (in case of a linear transponder)

Forward link          the service down link (and the feeder up-link in case of a linear transponder (BS to UT)

Return link           the service uplink (and the feeder down link in case of a linear transponder (UT to BS)

Service up-link       The UT to satellite link

Service down-link     The satellite to UT link

## 2. Introduction

This is the description of a radio interface to be used for the satellite component of the future Universal Mobile Telecommunication System, based on a Wideband Hybrid Code- and Time Division Multiple Access Scheme (W-C/TDMA).

This description comprises the basic techniques to be used in the physical layer of the radio interface subsystem and some basic system aspects. It addresses the channel mutiplexing, the multiple access schemes, the synchronization, the spreading, the modulation, the channel coding, diversity and hand-off schemes, the frame structure, the mapping of physical channels, and the accommodation of the various services with different data rates, quality, and robustness to be provided by 3rd generation of mobile personal satellite communication systems. The design of the satellite radio interface bases on some known concepts of satellite systems using different constellations and orbits (LEO, Ellipso Borealis , MEO, HEO, and GEO).

The satellite W-C/TDMA scheme described herein differs from the FDD-W-CDMA scheme as described in [1] for the terrestrial UMTS by its slotted structure (the TDMA component), and its quasi-synchronous operation of the return link resulting in a quasi-orthogonal partitioning of the radio resources within a beam of a satellite, avoiding self-noise.

Some asynchronous traffic is unavoidable and needs special measures to co-exist with synchronous traffic. Preserving quasi-orthogonality in a multi-satellite multi-beam scenario is not possible if a total frequency re-use is targeted. For this case, the processing gain inherent to CDMA, satellite path diversity techniques, and interference mitigation techniques may be employed to improve signal-to-interference ratio.

The duplexing methods supported by the satellite W-C/TDMA system described herein are frequency division duplex (FDD), where simultaneous transmission and reception is allowed, and frequency/time division duplex (F/TDD), where transmission and reception time periods are exclusive but on different frequencies.

Furthermore, the satellite W-C/TDMA scheme described herein intends to support the use of non-linear HPA in terminals (e.g. handheld terminals).

Even though these features may not be supported by future terrestrial paired bands standard, they might be interesting for satellite applications all the same.

In general, it is expected that terminals will be operated at higher transmit power levels in satellite networks compared to terrestrial networks. If this is the case, a HPA can be operated in its linear region to access terrestrial networks and in its saturating region for the satellite access. The diplexer might perform sufficiently well for terrestrial applications but not for satellite applications. Thus, F/TDD instead of FDD would be used for communication via satellites.

The use of orthogonal variable spreading factor codes allows a highly flexible channel assignment providing a fine granularity to accommodate the various bearer data rates to be supported by UMTS and to provide different processing gains required to adapt the system to the varying interference levels in multi-satellite scenarios.

The satellite W-C/TDMA scheme described herein also supports variable rate services by varying the code rate. The spreading factor is kept constant during a session.

The satellite W-C/TDMA scheme described herein also supports satellite path or beam diversity with maximum ratio combining, seamless intra-satellite beam hand-off, as well as seamless inter-satellite beam hand-off in a multiple beam/satellite scenario.

### 3. S-UMTS Service Requirements

### 3.1 Bearer Services

The relevant basic bearer service to be accommodated in a satellite-UMTS and their requirements are listed in Table 3-1. The meanings of "H", "V","T", and "F" are Handheld, Vehicular, Transportable, and Fixed, respectively.

| Bearer data rate | Max. delay (ms) | Different max. acceptable error rates to be supported | Terminal types to be supported |
|---|---|---|---|
| 1.2 kbps | 400 | $10^{-6}$ | H,V,T,F |
| 2.4 kbps | 400 | $10^{-3}$, $10^{-5}$, $10^{-6}$ | H,V,T,F |
| 4.8 kbps | 400 | $10^{-3}$, $10^{-5}$, $10^{-6}$ | H,V,T,F |
| 9.6 kbps | 400 | $10^{-3}$, $10^{-5}$, $10^{-6}$ | H,V,T,F |
| 16 kbps | 400 | $10^{-3}$, $10^{-5}$, $10^{-6}$ | H,V,T,F |
| 32 kbps | 400 | $10^{-3}$, $10^{-5}$, $10^{-6}$ | V,T,F |
| 64 kbps | 400 | $10^{-5}$, $10^{-6}$ | V,T,F |

Table 3-1- Bearer services to be supported by S-UMTS

### 3.2 Packet Data Services

Efficient packet services will be a key feature not only for the terrestrial but also for the satellite component of UMTS. Different packet length will be required to be supported. The intensity (frequency) of packet data traffic may vary significantly.

### 3.3 High Penetration Paging Service

This is a unidirectional short message service from the satellite to the UT (forward link) with data rates typically far below 1.2 kbps and with messages containing typically 100 bits or less. The primary use of such a service is paging or simple "ring alert" to terminals inside buildings or vehicles. Satellite in-building penetration necessitates a link margin, which is typically 20 dB higher than it is required for the outdoor coverage. High penetration messaging to a specific subscriber may be beam-wide, satellite-wide or even globally if the location of the subscriber is not known at all.

### 4. Basic Radio Interface Definition of the Satellite W-C/TDMA Scheme

An example of a basic radio interface definition using the satellite W-C/TDMA scheme is given in Table 4-1 and Table 4-2. The basic radio parameters such as chip-rate, bandwidth, carrier spacing, etc. are harmonized with the terrestrial UMTS radio interface using the paired band (FDD) W-CDMA scheme as it was defined in ETSI by the end of the year 1998 [1].

Throughout this description the forward link refers to the radio link between base station (BS) and the user terminal (UT) and the return link refers to the radio link between UT and BS.

| Multiplexing scheme | W-Orthogonal-C/TDM |
|---|---|
| Duplex mode (BS) | FDD |
| Carrier spacing | 5 MHz<br>(2.5 MHz [1]) |
| Chip rate | 4.096 Mcps<br>(2.048 Mcps optional) |
| Spreading factor | $16^{1)}$, 32, 64, 128, $256^{2)}$ |
| Channelization codes | Walsh-Hadamard (OVSF) |
| Randomization | Real bi-polar |
| Chip pulse shaping | SRRC, $\alpha = 0.22$ |
| Carrier modulation per user channel | QPSK |
| Data modulation | QPSK or<br>Dual BPSK |
| Max. bearer data rate<br>(single code transmission) | 64 kbps |
| UT receiver detection scheme | Pilot signal assisted quasi-coherent |
| Frame duration | 20 ms |
| No of slots per frame | 8 |

**Table 4-1** Basic definition of forward link

**Note 1)** For the 2.048 Mcps option only.

**Note 2)** Not valid for the 2.048 Mcps option.

| Multiple access scheme | W-Quasi-Synchronous/Quasi-Orthogonal-C/TDMA |
|---|---|
| Random access | W-asynchronous CDMA |
| Duplex mode (MS) | FDD or F/TDD |
| Carrier spacing | 5 MHz (2.5 MHz [1]) |
| Chip rate | 4.096 Mcps (2.048 Mcps optional) |
| Spreading factor | 16[1], 32, 64, 128, 256[2] |
| Channelization codes | Walsh-Hadamard (OVSF) |
| Randomization | Complex bi-polar |
| Chip pulse shaping | SRRC, $\alpha = 0.22$ |
| Carrier modulation | $\pi/4$-QPSK or non-linear approximation. |
| Data modulation | QPSK or Dual BPSK |
| Max. bearer data rate (single code transmission) | 64 kbps |
| BS receiver detection scheme | Pilot symbol assisted quasi-coherent |
| Frame duration | 20 ms |
| No of slots per frame | 8 |

**Table 4-2** Basic definition of return link

**Note 1)** For the 2.048 Mcps option only.

**Note 2)** Not valid for the 2.048 Mcps option.

## 5. Transport Layer Channel Structure

The basic logical and physical channel structure assumed for the definition of the satellite W-C/TDMA scheme is according to [2].

### 5.1 Logical Channels

The basic logical channels to be mapped on physical channels are listed in Table 5-2 for the forward link and Table 5-4 for the return link and base on [2].

The logical channels are divided into two categories: the control logical channels carrying system information and control commands, and the traffic logical channels carrying user data. The control logical channels may be further divided into common control logical channels and dedicated logical channels (Table 5-1 and Table 3-1).

| logical Channels | control | common | CCCH |
| | | | BCCH |
| | | | FACH |
| | | | PCH |
| | | dedicated | DCCH |
| | traffic | dedicated | DTCH |

**Table 5-1**- Forward link logical channel categories

| CCCH | Common Control Channel | point-to-multi-point, connectionless signaling |
|------|------------------------|-----------------------------------------------|
| BCCH | Broadcast Control Channel | point-to-multi-point, system- and beam specific information |
| FACH | Forward Access Channel | control information to UT in one beam (UT location known), packet services |
| PCH | Paging Channel | Point-to-multi-point, control information, paging to MS in paging area (UT location unknown) |
| DCCH | Dedicated Control Channel | point-to-point signaling |
| DTCH | Dedicated Traffic Channel | point-to-point user data (connection oriented) |

**Table 5-2-** Forward link logical channels

| logical channels | control | Common | RACH |
|------------------|---------|--------|------|
|                  |         |        | RTCH |
|                  |         | Dedicated | DCCH |
|                  | traffic | Dedicated | DTCH |

**Table 5-3-** Return link logical channel categories

| RACH | Random Access channel | Signaling, Control information |
|------|----------------------|-------------------------------|
| DCCH | Dedicated Control Channel | Signaling, Control information |
| DTCH | Dedicated Traffic Channel | user data |
| RTCH | Random Traffic Channel | Short user packet data |

**Table 5-4-** Return link logical channels

### 5-2 Physical Channels

The physical channels are listed in Table 5-5 and Table 5-6.The common pilot channel exists on the forward link only. It is mapped on a single orthogonal channelization code and may serve for radio signal strength monitoring purposes in the UT to support hand-off, for the forward link acquisition and for channel estimation and synchronization purposes in the UT.

The Dedicated Physical Control Channel (DPCCH) serves for layer 1 signaling, such as user dedicated pilot symbols for channel estimation and synchronization purposes, transmit power control (TPC), return link timing and frequency control (TFC) (required for quasi-synchronous operation), and the frame control header (FCH).

Clearly, dedicated pilot symbols have to be used on the return link. Dedicated pilot symbols are also required on the forward link, if individual user tracking (adaptive antenna steering) is employed by future satellites, or single code reception of one dedicated channel has to be supported.

The frame control header may indicate the transmission rate (RI) on the current frame or the type of information transmitted. If conventional multi-beam antennas are assumed, the use of pilot symbols in the dedicated physical control channel may become obsolete and could be removed. Filling the empty pilot positions with additional coding redundancy is a possible solution in this case.

| | Physical channel | Mapping |
|---|---|---|
| P-CCPCH | Primary Common Control Physical Channel | BCCH |
| S-CCPCH | Secondary Common Control Physical Channel | FACH, PCH |
| HP-CCPCH | High Penetration - CCPCH | PCH, common synchronis. word |
| PI-CCPCH | Pilot Common Control Physical Channel | Common pilot |
| DCPCH | Dedicated Control Physical Channel | dedicated layer 1 signaling and pilot symbols |
| DDPCH | Dedicated Data Physical Channel | DTCH, DCCH |

**Table 5-5-** Forward link physical channels

| | Physical channel | Mapping |
|---|---|---|
| RAPCH | Random Access Physical Channel | RACH, RTCH |
| DCPCH | Dedicated Control Physical Channel | dedicated layer 1 signaling and pilot symbols |
| DDPCH | Dedicated Data Physical Channel | DTCH, DCCH |

**Table 5-6** Return link physical channels

## 6- The Multiple Access Scheme

### 6.1 Approach

The access scheme described in this chapter is based on a Hybrid CDMA/TDMA scheme. Orthogonal C/TDM is used on the forward link and quasi-synchronous/quasi-orthogonal C/TDMA on the return link. The feasibility of a quasi-synchronous return-link depends mainly on the Doppler variations occurring in the particular satellite constellation and the achievable tracking speed of the required high performance timing control loop. It could be shown that a quasi-synchronous return-link is principally feasible in all known type of orbits and constellations for a chip-rate up to 4 Mchip/s.

One of the inconveniences encountered in a system using a quasi-synchronous return-link is the handling of the asynchronous (non-orthogonal) traffic. Quasi-synchronous traffic occurs, when an UT tries to access the BS before being time aligned to the return link frame structure by the forward link timing control. Any initial access to set-up, to restore a connection, or to send short infrequent data packets, where a connection set-up or timing maintenance signaling is not justified, has to be transmitted asynchronously, because the UT presumably cannot know the exact arrival time at the BS. Once after having received timing control information from the BS, the UT is able to correct its timing such that reception at the BS will be quasi-synchronous with the other users.

In theory, if the UT knew its own and the satellite position, the UT could compute the propagation delay and target its timing to be quasi-synchronous at the BS. In principle the satellite position could be continuously broadcast by the BS. Knowledge of the UTs precise position by the UT, however, would mean that either the UT has access to the GPS, or an autonomous positioning system is provided by the satellite-UMTS, without the need of return link closure. Currently, none of these assumptions can be made for the future satellite-UMTS. Thus, asynchronous traffic has to be taken into account.

In principle, the return link timing uncertainty can be reduced to the variation of the round-trip delay inside the footprint of the particular antenna beam. Assuming a multi-beam satellite antenna, the UT knows the serving beam and may read beam specific information sent by the BS on the forward link. This information could be the beam specific delay associated to the beam center point.

The computed delay offsets from the beam center point expected within the furthest beam and the closest beam are listed in Table 10-2 for all satellite constellations considered. (The furthest beam is meant to be the most outer beam of a multi-beam cluster whose footprint is perpendicular below the orbit. The closest beam is the beam in the center of the cluster.)

The asynchronous traffic is accommodated in one of the frames of a multi-frame (Fig. 6-1) with all frames having equal duration to maintain periodicity in the multi-frame structure.

The frame size is chosen with respect to the expected maximum round trip delays relative to the beam center point (Table 10-2). All values computed for the different satellite constellations are in the range + 9 ms to - 5 ms (twice the relative propagation delays). Having in mind an access burst duration in the order of 1/8 frame duration, a frame duration of 20 ms is chosen.

The introduction of an asynchronous traffic frame where the regular data transmission is interrupted causes an increase of the transmission delay by one frame duration.

A convenient solution is an allocation of one in 9 frames to asynchronous traffic corresponding to 11%. The number of frames containing quasi-synchronous traffic will be 8, which is a multiple divisible number. A multiple divisible number is advantageous to realise the various user data rates to be provided by the system.

The major drawback of segregating asynchronous traffic in a special frame is the inflexibility with respect to variations of the asynchronous-to-quasi-synchronous traffic load ratio. It seems to be dangerous to change the multi-frame structure during system operation, if, for instance, more asynchronous traffic capacity is demanded. Thus a fixed multi-frame structure has to be assumed designed for a specified maximum traffic load. Of coarse, the BS may provide measures to limit the asynchronous traffic load avoiding break-down by excessive interference. However, this would result in call set-up delays and/or packet data traffic stucking.

An identical multi-frame structure is applied on the forward link. This is compulsory if the use of terminals operating in F/TDD mode has to be supported. However, instead of asynchronous traffic, common control channels are allocated in this special frame. In addition, if there is capacity left, packet data may be transferred in the special frame.

Time multiplexing of layer 1 signaling (DCPCH and DDPCH) is chosen for both forward and return link by the following reasons:

- On the forward link, the use of time multiplexing reduces the number of codes which have to be processed in parallel in an UT resulting in a lower complexity compared to code multiplexing.

- On the return link, time multiplexing is more suitable to provide a transmit signal with relatively low envelope fluctuation. Minimizing envelope fluctuation in case of code multiplexing where different code transmissions are superimposed is more difficult.

## 6.2 Frame Structure

Frame structure in its general sense means partitioning of channel resources in time in a hierarchical order. The highest hierarchical order considered in this description is the multi-frame, followed by the frame and the time slots at the lowest level.

Fig. 6-1 shows a definition of the frame structure with nine frames (1 extra and 8 ordinary frames) per multi-frame, 8 slots per frame, and a frame duration of 20 ms.

Fig. 6-2 illustrates the non-slotted frame#0 on the return link where asynchronous traffic (initial access) takes place.

## 6.3 Burst Structure

A Burst is a piece of data bearing modulated carrier signal. It is defined as the minimum entity to transport information in a slotted channel structure. A burst may have a duration of a single slot period or an integer number of slot periods as defined below.

In case of synchronous or quasi-synchronous transmission, a burst may fill a time slot or a multiple of time slots of a frame. If the burst is a multiple of a time slot, it may be split and filled into non-contiguous slots belonging to the same frame.

In case of asynchronous transmission, a burst is an isolated piece of data bearing modulated carrier signal, transmitted in a frame which is not partitioned in time slots. It is generally transmitted at random time, however, such that it does not infringe an adjacent frame.

Two different burst sizes (in terms of symbols) are used, a small burst containing 160 symbols and a big burst containing 320 symbols. Assuming that some of the control symbols needed are the same for both burst sizes, the big burst exhibits a smaller relative overhead than the small burst. The small burst, on the other hand, provides finer quantization of user data rates.

For a given chip rate, different burst durations (in terms of a number of slot periods) result if the spreading factor is changed. This is shown in Table 6-1 and Table 6-2 for the 2.048 Mchip/s and the 4.096 Mchip/s option, respectively. These tables contain the different spreading factors and refer to frame structure option 1.

| Burst duration in No of slot periods | Spreading factor | No of symbols (dibits) |
|---|---|---|
| 1 | 16 | 320 |
| 1 | 32 | 160 |
| 2 | 32 | 320 |
| 2 | 64 | 160 |
| 4 | 64 | 320 |
| 4 | 128 | 160 |

**Table 6-1-** Burst duration, spreading factor, and number of symbols for the 2.048 Mchip/s-Option.

| Burst duration in No of slot periods | Spreading factor | No of symbols (dibits) |
|---|---|---|
| 1 | 32 | 320 |
| 1 | 64 | 160 |
| 2 | 64 | 320 |
| 2 | 128 | 160 |
| 4 | 128 | 320 |
| 4 | 256 | 160 |

**Table 6-2** Burst duration, spreading factor, and number of symbols for the 4.096 Mchip/s-Option.

Burst size and spreading factor are assumed to be controlled by the BS and will not be changed during a session. Variable rate transmission is accomplished by solely selecting different coding rates indicated in the frame control header (FCH). Information rate may change on a burst-to-burst basis.

### 6.3.1 Forward link bursts

| Physical Channel | DCPCH | | | | DDPCH |
|---|---|---|---|---|---|
| Layer 1 data type | FCH | TPC | TFC | (PILOT) | DATA |
| No of symbols | $N_{FFD}$ | $N_{TPD}$ | $N_{TFD}$ | $(N_{PFD})$ | $N_{DFD}$ |
| Tot. no of symb. | $N_{OFD}$ | | | | |
| Field partitioning | control and user data interleaved, (pilot symbols equally spaced) | | | | |
| Duration | 1,2, or 4 slot periods | | | | |

**Table 6-3** Forward link dedicated burst.

**Note:** If the common pilot is used for channel estimation and synchronization for decoding of dedicated channels, pilot symbols may be replaced by data (redundancy).

| Physical Channel | CCPCH | |
|---|---|---|
| Layer 1 data type | FCH | DATA |
| No of symbols | $N_{FFC}$ | $N_{DFC}$ |
| Tot. no of symb. | $N_{OFC}$ | |
| Field partitioning | control and user data interleaved | |
| Duration | 1,2, or 4 slot periods | |

**Table 6-4** Forward link common burst

| Physical Channel | HP-CCPCH | | |
|---|---|---|---|
| Layer 1 data type | SW | PILOT | DATA |
| No of symbols | $N_{SWS}$ | $N_{PFS}$ | $N_{DFS}$ |
| Tot. no of symb. | $N_{OFS}$ | | |
| Field partitioning | SW | pilot symbols equally spaced | |
| Duration | 1 slot period | | |

**Table 6-5** Forward link synchronization burst

### 6.3.2 Return link bursts

| Physical Channel | RAPCH | | |
|---|---|---|---|
| Layer 1 data type | SW | PILOT | DATA |
| No of symbols | $N_{SRR}$ | $N_{PRR}$ | $N_{DRR}$ |
| Tot. no of symb. | $N_{ORR}$ | | |
| Field partitioning | SW | pilot symbols equally spaced | |
| Duration | 1 slot period | | |

**Table 6-6** Random access burst

| Physical Channel | DCPCH | | | DDPCH |
|---|---|---|---|---|
| Layer 1 data type | FCH | TPC | (PILOT) | DATA |
| No of symbols | $N_{FRD}$ | $N_{TRD}$ | ($N_{PRD}$) | $N_{DRD}$ |
| Tot. no of symb. | $N_{ORD}$ | | | |
| Field partitioning | control and user data interleaved, (pilot symbols equally spaced) | | | |
| Duration | 1,2, or 4 slot periods | | | |

**Table 6-7** Return link dedicated burst

### 6.3 Definition of Burst parameters

A definition of the various burst parameters (number of symbols) are given in Table 6-6 to Table 6-12. These tables also show the overhead percentage for both the small and the big burst.

It is assumed that one FCH code word is transmitted per burst and no TFC is required on the return link. If the common pilot channel (PI-CCPCH) can be used for channel estimation and synchronization, the overhead may be significantly reduced. This is however only valid for the forward link.

| | | Small burst | | Big burst | |
|---|---|---|---|---|---|
| | | symbols | percent | symbols | percent |
| Total | $N_{OFD}$ | 160 | 100 % | 320 | 100 % |
| Data | $N_{DFD}$ | 112 | 70 % | 256 | 80 % |
| (Pilot) | $(N_{PFD})$ | (16) | (10 %) | (32) | (10 %) |
| FCH | $N_{FFD}$ | 16 | 10 % | 16 | 5 % |
| TPC | $N_{TPD}$ | 8 | 5 % | 8 | 2.5 % |
| TFC | $N_{TFD}$ | 8 | 5 % | 8 | 2.5 % |
| Tot. overhead | | 48 | 30 % | 64 | 20 % |

**Table 6-8** Forward link dedicated burst.

| | | Small burst | | Big burst | |
|---|---|---|---|---|---|
| | | symbols | percent | symbols | percent |
| Total | $N_{OFC}$ | 160 | 100 % | 320 | 100 % |
| Data | $N_{DFC}$ | 144 | 90 % | 304 | 95 % |
| FCH | $N_{FFC}$ | 16 | 10 % | 16 | 5 % |
| Tot. overhead | | 16 | 10 % | 16 | 5 % |

Table 6-9  Forward link common burst.

| | | Small burst | |
|---|---|---|---|
| | | symbols | percent |
| Total | $N_{OFS}$ | 160 | 100 % |
| Data | $N_{DFS}$ | 112 | 70 % |
| SW | $N_{SWS}$ | 32 | 20 % |
| Pilot | $N_{PFS}$ | 16 | 10 % |
| Tot. overhead | | 48 | 30 % |

Table 6-10  Forward link synchronization burst.

| | | Small burst | |
|---|---|---|---|
| | | symbols | percent |
| Total | $N_{ORR}$ | 160 | 100 % |
| Data | $N_{DRR}$ | 112 | 70 % |
| SW | $N_{SRR}$ | 32 | 20 % |
| Pilot | $N_{PRR}$ | 16 | 10 % |
| Tot. overhead | | 48 | 30 % |

Table 6-11  Random access burst.

| | | Small burst | | Big burst | |
|---|---|---|---|---|---|
| | | symbols | percent | symbols | percent |
| Total | $N_{ORD}$ | 160 | 100 % | 320 | 100 % |
| Data | $N_{DRD}$ | 120 | 75 % | 264 | 82.5 % |
| Pilot | $N_{PRD}$ | 16 | 10 % | 32 | 10 % |
| FCH | $N_{FRD}$ | 16 | 10 % | 16 | 5 % |
| TPC | $N_{TRD}$ | 8 | 5 % | 8 | 2.5 % |
| Tot. overhead | | 40 | 25 % | 56 | 17.5 % |

Table 6-12  Return link dedicated burst.

It is assumed that one FCH code word is transmitted per burst and no TFC is required on the return link.

If the common pilot channel (PI-CCPCH) can be used for channel estimation and synchronization, the overhead may be significantly reduced. This is however only valid for the forward link. A further potential to reduce overhead is the transmission of the FCH. Instead of transmitting the FCH once per burst it could be transmitted once per frame, distributing FCH data on all bursts in a frame, which is proposed in [3]. This would decrease the overhead in those cases where more than one burst is transmitted per frame.

## 6.5. Channel Assignment and Transmission Modes

The combination of an assignment of a number of channelization codes and time slots in a multi-frame constitutes a virtual channel assignment. The number of codes will likely be equal to one, but might be greater than one if UTs capable of multi-code reception and/or transmission are considered. The assignment of slots for dedicated channels is restricted to frames #1 to #8. A channel assignment is valid for the duration of a session.

The principle of OVSF codes (ref. chapter 8) permits orthogonal or quasi-orthogonal channels with codes associated to different spreading factors to coexist. Channelization code, slots, burst type, and other link parameters for the forward and return link are assigned by the BS during the set-up of a session. During a session the spreading factor remains constant. Variable rate transmission is realised solely by changing the code rate (ref. section 7.1).

Different transmission modes are considered:

- Two-way stream mode transmission: a communication channel is assigned on the forward and the return link.

- Forward link stream mode one-way transmission: a communication channel is assigned only on the forward link.

- Return link stream mode one-way transmission: this mode is prohibited since there is no possibility to send TFC commands on the forward link.

- Packet data transfer: If the frequency of packets to the same destination is low, no channel will be assigned and packets are transferred in frame#0. This is valid for both directions. (Zones at the edges of frame#0 where congestion is assumed to be lower will preferably be used for packet transfer in return direction). If the frequency of packets to the same destination is sufficiently high to justify a session, a dedicated channel may be assigned in frames #1 to #8.

An optimum choice of the justification threshold for an assignment of a dedicated channel for packet data transfer is crucial. It should prevent overloading of frame#0 in particular of the return link and save satellite power. Connection-less packet data transfer does not allow power control. Thus, higher link margins have to be provided for packet transmission requiring more satellite power. On the other hand, channel assignments require signaling overhead which also requires additional satellite energy and reduces capacity.

## 7. Channel Coding, Rate Adaptation and Service Multiplexing

A variety of services demanding different transmission rates and quality have to be supported by the satellite UMTS as shown in chapter 3. In addition, multiplicity of services and variable rate services have to be considered.

Fig. 7-1 represents the channel coding and service multiplexing scheme for the forward and return link dedicated physical channel. The diagram is generic and applies in the simple case where only one service with specified quality and rate is transmitted on a single burst in a single code channel as well as in the more general case where multiple services requiring different rates and qualities are simultaneously transmitted on a single burst in a single code channel.

In principle, there is always the trivial solution to transmit multiple services in parallel using multiple channelization codes in the same time slot. This however requires special UTs capable of multi-code transmission and/or reception.

The demultiplexing and decoding schemes to be applied at the receiving side are indicated by the FCH. As already pointed out in section 6.1, DDPCH and DCPCH information is also time multiplexed and transmitted in the same code channel.

## 7.1 Dedicated Physical Channel

A concatenated channel coding scheme using a (9,1/3)-convolutional code as the inner code and an ($N_R$ ,$K_R$)-Reed-Solomon-Code over GF($2^m$) as the outer code is a state-of-the-art solution providing high service quality at low $E_b/N_0$ for reasonable decoding complexity. This method was also adopted by ETSI in the terrestrial UMTS W-CDMA scheme [1]. Turbo coding might be an alternative solution.

For standard quality services, the rate 1/3 convolutional code will be used only, matched to the requested data rate by repeating or puncturing bits after coding. To support variable rate services, the code rate is adapted in a relatively large range using bit repetition or puncturing. Assuming partially coherent detection at the receiver and a high performing chip synchronization, code rate $R$ may be varied in the range from 1/2 down to 1/8 without significant penalty in terms of $E_b/N_0$.

For variable rate services, the coding rate of the convolutional code will be continuously adapted using bit puncturing or bit repetition on a burst-by-burst basis. An adequate fixed spreading factor is chosen at the set-up of a session. This is in contrast to other W-CDMA proposals for UMTS e.g. [1,3]. This approach simplifies the processing in the receiver and channel resource management.

Different interleaving techniques are usually provided in communication systems designed for fading channels. Bit-reordering (e.g. rectangular block interleaving) for intra burst interleaving is always applied. In addition, for services allowing longer transmission delays inter burst interleaving schemes (spreading over several frames) providing more interleaving depth may be employed (e.g. blockwise convolutional interleaving which is sometimes called diagonal interleaving).

The FCH needs powerful coding to avoid degradation of the DDPCH error rate performance by FCH decoding errors. A (32,6)-bi-orthogonal code and additional bit repetition as proposed in [1,3] is adopted. The actual code rate for the FCH needed may be adjusted by post-coding bit repetition on request at the connection set-up in order to provide an adequate FCH error rate performance for a particular service.

Fig. 7-1 shows the generic forward and return link coding and service multiplexing scheme of the dedicated physical channel. The final multiplexing before spreading and modulation is symbol (dibit) oriented and not bit-oriented, since the use of QPSK as data modulation will be supported on both forward and return link.

The satellite W-C/TDMA scheme may provide a large variety of combinations of user data rates and spreading factors. Matching to a demanded fixed rate bearer service may be performed by changing the number of slots per frame or the spreading factor. For variable rate services, the spreading factor and slot assignment will be fixed for the duration of a session, while the code rate is adapted on a burst-by-burst basis.

Table 7-1, Table 7-2 and Table 7-3 show examples of rate matching applied to the basic fixed rate bearer services specified in chapter 3 for spreading factors 16 and 32 in case of the 2.048 Mcps option and 32 and 64 in case of the 4.096 Mcps option using the big and the small burst, respectively. Table 7-4 shows further examples using different spreading factors and either the small or the big burst. These tables base on overhead assumptions given in section 6.4 valid for the transmission of a standard quality service using the inner convolutional code only. In any case, single code transmission is assumed.

The burst rate defines the number of bursts in a number of frames.

| Bearer data rate | 2.4 kbps | 4.8 kbps | 9.6 kbps | 16 kbps | 32 kbps | 64 kbps |
|---|---|---|---|---|---|---|
| Chip rate (Mchip/s) | 2.048 | 2.048 | 2.048 | 2.048 | 2.048 | 2.048 |
| Spreading factor | (16),32 | (16),32 | (16),32 | (16),32 | (16),32 | (16),32 |
| Symbol rate (ksymbol/s) | 128 | 128 | 128 | 128 | 128 | 128 |
| Burst duration (in slots) | 1 | 1 | 1 | 1 | 1 | 1 |
| Burst rate | 1 in 4 frames. | 1 in 2 frames | 1 in 1 frame | 2 in 1 frame | 4 in 1 frame | 8 in 1 frame |
| No of symbols in burst | 320 | 320 | 320 | 320 | 320 | 320 |
| No of DDPCH symbols in burst ($N_c/2$) | 256 | 256 | 256 | 256 | 256 | 256 |
| No of DCPCH symbols in burst | 64 | 64 | 64 | 64 | 64 | 64 |
| No of bearer data bits in burst ($K_c$) | 216 | 216 | 216 | 180 | 180 | 180 |
| Mother code rate | 1/3 | 1/3 | 1/3 | 1/3 | 1/3 | 1/3 |
| Actual code rate ($K_c/N_c$) | 0.42 | 0.42 | 0.42 | 0.35 | 0.35 | 0.35 |

Table 7-1 Examples of rate matching for the different fixed rate bearer services using a spreading factor of 32 (16 in case of the 2.048 Mcps option) and the big.

| Bearer data rate | 2.4 kbps | 4.8 kbps | 9.6 kbps | 16 kbps | 32 kbps | 64 kbps |
|---|---|---|---|---|---|---|
| Chip rate (Mchip/s) | 2.048 | 2.048 | 2.048 | 2.048 | 2.048 | 2.048 |
| Spreading factor | (32),64 | (32),64 | (32),64 | (32),64 | (32),64 | (32),64 |
| Symbol rate (ksymbol/s) | 64 | 64 | 64 | 64 | 64 | — |
| Burst duration (in slots) | 2 | 2 | 2 | 2 | 2 | — |
| Burst rate | 1 in 4 frames. | 1 in 2 frames | 1 in 1 frame | 2 in 1 frame | 4 in 1 frame | — |
| No of symbols in burst | 320 | 320 | 320 | 320 | 320 | — |
| No of DDPCH symbols in burst ($N_c/2$) | 256 | 256 | 256 | 256 | 256 | — |
| No of DCPCH symbols in burst | 64 | 64 | 64 | 64 | 64 | — |
| No of bearer data bits in burst ($K_c$) | 216 | 216 | 216 | 180 | 180 | — |
| Mother code rate | 1/3 | 1/3 | 1/3 | 1/3 | 1/3 | — |
| Actual code rate ($K_c/N_c$) | 0.42 | 0.42 | 0.42 | 0.35 | 0.35 | — |

Table 7-2 Examples of rate matching for the different fixed rate bearer services using a spreading factor of 64 (32 in case of the 2.048 Mcps option) and the big burst.

| Bearer data rate | 2.4 kbps | 4.8 kbps | 9.6 kbps | 16 kbps | 32 kbps | 64 kbps |
|---|---|---|---|---|---|---|
| Chip rate (Mchip/s) | 2.048 | 2.048 | 2.048 | 2.048 | 2.048 | 2.048 |
| Spreading factor | (32),64 | (32),64 | (32),64 | (32),64 | (32),64 | (32),64 |
| Symbol rate (ksymb/s) | 64 | 64 | 64 | 64 | 64 | — |
| No of slots/ burst | 1 | 1 | 1 | 1 | 1 | — |
| Burst rate | 1 in 2 frames | 1 in 1 frame | 2 in 1 frame | 4 in 1 frame | 8 in 1 frame | — |
| No of symbols in burst | 160 | 160 | 160 | 160 | 160 | — |
| No of DDPCH symbols in burst $(N_c/2)$ | 112 | 112 | 112 | 112 | 112 | — |
| No of DCPCH symbols in burst | 48 | 48 | 48 | 48 | 48 | — |
| No of bearer data bits in burst $(K_c)$ | 108 | 108 | 108 | 90 | 90 | — |
| Mother code rate | 1/3 | 1/3 | 1/3 | 1/3 | 1/3 | — |
| Actual code rate $(K_c/N_c)$ | 0.48 | 0.48 | 0.48 | 0.4 | 0.4 | — |

**Table 7-3** Examples of rate matching for the different fixed rate bearer services using a spreading factor of 64 (32 in case of 2.048 Mcps-option) and the small burst.

| Bearer data rate | 2.4 kbps | 2.4 kbps | 4.8 kbps | 4.8 kbps | 9.6 kbps | 9.6 kbps |
|---|---|---|---|---|---|---|
| Chip rate (Mchip/s) | 2.048 | 2.048 | 2.048 | 2.048 | 2.048 | 2.048 |
| Spreading factor | (128), 256 | (64),128 | (64),128 | (32),64 | (32),64 | (16),32 |
| Symbol rate (ksymbol/s) | 16 | 32 | 32 | 64 | 64 | 128 |
| Burst duration (in slots) | 4 | 4 | 2 | 2 | 1 | 1 |
| Burst rate | 1 in 2 frame | 1 in 4 frame | 1 in 1 frame | 1 in 2 frame | 2 in 1 frame | 1 in 1 frame |
| Burst type | Small | big | small | big | small | Big |
| No of symbols in burst | 160 | 320 | 160 | 320 | 160 | 320 |
| No of DDPCH symbols in burst ($N_c$ /2) | 112 | 256 | 112 | 256 | 112 | 256 |
| No of DCPCH symbols in burst | 48 | 64 | 48 | 64 | 48 | 64 |
| No of bearer data bits in burst ($K_c$) | 108 | 216 | 108 | 216 | 108 | 216 |
| Mother code rate | 1/3 | 1/3 | 1/3 | 1/3 | 1/3 | 1/3 |
| Actual code rate ($K_c/N_c$ ) | 0.48 | 0.42 | 0.48 | 0.42 | 0.48 | 0.42 |

**Table 7-4** Examples of rate matching for the different fixed rate bearer services using different spreading factors, either the small or the big.

The inner (9,1/3)-convolutional code is regarded as a ($N_c$, $K_c$)-block code, where $N_c$ is the number of encoder output bits, corresponding to $N_c$ /2 DDPCH symbols (dibits), and $K_c$ the number of encoder input bits, corresponding to the number of bearer data bits. The actual code rate is $R_c = K_c / N_c$ . The required overhead by tail bits to be inserted is included in the number of encoder output bits. Thus, the punctured code rate would be slightly higher.

The additional implications on the selection of spreading factor and burst rate by the F/TDD mode operation are treated in section 9.8.

Examples for variable rate transmission are not shown here. In a variable rate channel the code rate may change on a burst-by-burst basis. For each variable rate service there will be a maximum code rate which may correspond to one of the example given in the tables above. Lower code rates are generally performed by first omitting puncturing and if necessary by additionally employing unequal bit repetition, thus reducing the number of bearer data bits in the burst ($K_c$).

## 7.2 Common Control Physical Channel and Packet Mode Data

The (9,1/3)-convolutional code with bit repetition or puncturing is also used for the common control channels. Different grades of error protection might be required for the various common control logical channels (e.g. broadcast, paging). An additional error detecting code (e.g. CRC) will be overlaid in order to ensure integrity of the control data.

The same coding scheme is also applicable to packet mode services, where an integrity check is required in the physical layer.

## 7.2.1 High penetration paging service

Special attention has to be paid to the high penetration paging service (ref. section 3.3). This is a short message service providing a link margin which is roughly 20 dB higher than that of the ordinary services (base line). There are fundamentally two ways to achieve higher link margins:

1. reducing the transmission rate

2. increasing the instantaneous transmit power

With the assumption of a base line service using constraint length 9 convolutional coding and BPSK, the potential in achievable coding gain seems to be already exploited. This means, the best known coding schemes (adapted to the purpose) would not decrease the base line $E_b/N_0$ significantly compared to the high gains required. No remarkable contribution may therefore be assumed from a sophisticated coding scheme.

For the W/CTDMA option the second approach is chosen which does not require reduction of chip rate. The High penetration common control physical channel (HP-CCPCH) will be allocated in a special slot in the control frame. No other channels are assigned to the same slot. Thus the total power available per spot beam can be entirely devoted to the high penetration service. The increase of power still may not be sufficient to achieve a 20 dB excess margin. A reduction of transmission rate could be additionally considered. This can be realised by allocating more than one slot solely to the high penetration service.

An alternative is to reduce the number of beams of a satellite where paging simultaneously takes place by forming groups of beams. In the extreme case, the HP-CCPCH is transmitted only in one beam at a time with the total available satellite power in a revolving manner. This approach would not require to lower the transmission rate at all and may provide link margins being even higher than those assumed.

The total available power per spot beam is assigned to the HP-CCPCH. No other physical channel are transmitted in the time slot assigned to the HP-CCPCH. Transmission of the common pilot channel (PI-CCPCH) is interrupted during these slots. Assuming a maximum of 32 orthogonal code channels to be supported by the satellite, this corresponds to an increase of power by a factor of 15 dB. A code with code rate being in the order of 1/3 may be employed.

The HP-CCPCH must provide an own synchronization aid since UTs highly shadowed are not able to synchronise by means of the pilot common control physical channel (PI-CCPCH). A synchronization word (SW) is therefore accommodated in the burst used for the high penetration messaging. This SW may generally be used by all UTs (nonshadowed) in order to acquire forward link synchronization. The burst carrying the HP-CCPCH is therefore called "Synchronization Burst" (ref. section 6.3.1).

In addition, the HP-CCPCH is repeated 4 times using 4 consecutive slots (slot#1-4) of frame#0 in every $M$-th multi-frame ($M$ = 8). Different SWs have to be assigned to each of the 4 slots in order to preserve ambiguity. In those multi-frames common control capacity will be reduced to approx. 60% of the ordinary case.

In the multi-frames with enhanced high penetration paging, the UT may apply simple bit combining to increase signal-to-noise ratio (repetition coding) by approximately 5 dB. A priori knowledge about presence of the special multi-frame is not necessary in order to exploit the signal energy of all 4 slots.

The application of sliding averaging techniques in the UT from multi-frame to multi-frame would be an alternative. Regarding LEO systems, application of such techniques seem to be rather difficult due to the high Doppler drifts which cannot be pre-compensated by the BS if synchronisme between the different beams of a satellite has to be maintained (section 9.4.2).

The paging strategy is as follows: A first paging attempt is done on an ordinary common control channel allocated in a slot (#2 to #8) of frame#0. If this first attempt fails, the ordinary single slot HP-CCPCH will be used to alert the user. If this attempt fails too, the BS may try the enhanced 4-slot HP-CCPCH.

In most cases the location area of an UT to be paged is known. Thus beam-wise high penetration paging will usually be applied to save satellite power. It is reasonable to assume regional or global high penetration paging to be used in emergency cases only.

### 7.2.2 Common pilot channel

The common pilot channel is allocated to one code channel, which is the all zero word of the Walsh-Hadamard code set. It may be regarded as a continuous repetition of the same data bit. In fact, the common pilot signal is the randomization sequence transmitted at chip rate.

### 8 Spreading and Modulation

### 8.1 General

For spread spectrum systems it is usually distinguished between data and spreading modulation. The term data modulation designates the equivalent symbol modulation technique employed if the carrier was not spread. The spreading modulation refers to the chip modulation on the lowest level. In general different schemes are employed for data (symbol) and spreading (chip) modulation.

In principle, there are two efficient methods to transmit two data bits in parallel. These are QPSK and dual BPSK data modulation. The distinction of the two schemes is not always evident and is defined here as follows: The data modulation is called QPSK if the corresponding receiver provides one I/Q (complex) baseband output where in general for any carrier phase offset a rotated version of a 4-phase signal constellation results. The data modulation is called dual BPSK, if the corresponding receiver provides two I/Q (complex) baseband outputs, where in general at each output and for any carrier phase offset a rotated version of a 2-phase signal constellation results.

If a perfectly coherent detection is assumed, the two schemes would perform equally well. However, employing quasi-coherent detection in channels with carrier phase perturbations, dual BPSK is expected to perform slightly better than QPSK in terms of energy efficiency.

Fig. 8-1 and Fig. 8-2 represent the generic spreader and modulator for the forward and return link, respectively. The principle of the spreading and modulation scheme for the forward and return link is described in the following: After insertion (multiplexing) of pilot symbols (dibits) (if required), the dibit stream is split into two bi-polar data streams, called the I- and the Q-stream. These data, clocked at symbol rate, are multiplied with the components of the channelization code vector denoted $c_{s,m}$, clocked at chip rate, such that one bi-polar data sample is a scalar factor of the code vector. This operation is called channelisation. The resulting I- and Q-spread transmit sequences are additionally randomised using PN-sequences, called randomization codes, denoted $c_{r,n}$ .Channelization and randomization together makes the spreading.

There are three different ways to randomise:

- real using a single randomization code,

- complex randomization using a pair of randomization code and full complex multiplication,

- I/Q independent randomization using a pair of randomization codes such that one code is multiplied with the I-branch signal and the other code with the Q-branch signal.

In this context, real randomization requires the lowest complexity in the receiver, while complex randomization yields a more noise like amplitude distribution in the complex plane for any input to the randomiser. I/Q independent randomization requires lower complexity in the transmitter than complex randomization but has similar effect. However, it is believed that higher complexity is required in the receiver, if dedicated pilot symbols instead of the common pilot have to be used for partially coherent detection.

Possible code configurations for QPSK and dual BPSK using either real or complex randomization are listed in Table 8-1.

| Data modulation | Channelization codes | Randomization codes | Remarks |
|---|---|---|---|
| QPSK | $c_{s,m} = c_{s,m-1}$ | $c_{r,n} = c_{r,n-3},$ $c_{r,n-1} = c_{r,n-2} = 0$ | real randomization |
| QPSK | $c_{s,m} = c_{s,m-1}$ | $c_{r,n} = c_{r,n-2} \neq c_{r,n-1} = c_{r,n-3}$ | complex randomization |
| Dual BPSK | $c_{s,m} = c_{s,m-1}$ | $c_{r,n} \neq c_{r,n-3},$ $c_{r,n-1} = c_{r,n-2} = 0$ | different randomization on I and Q branch |
| Dual BPSK | $c_{s,m} \neq c_{s,m-1}$ | $c_{r,n} = c_{r,n-3},$ $c_{r,n-1} = c_{r,n-2} = 0$ | real randomization |
| Dual BPSK | $c_{s,m} \neq c_{s,m-1}$ | $c_{r,n} = c_{r,n-2} \neq c_{r,n-1} = c_{r,n-3}$ | complex randomization |

**Table 8-1** Possible channelization and randomization code configurations (ref. to Fig. 8-1).

Orthogonal variable spreading factor (OVSF) codes based on a length 128 Walsh-Hadamard code set for the 2.048 Mcps option and on a length 256 Walsh-Hadamard code set for the 4.096 Mcps option are employed as also proposed in [1, 3]. This fundamental set of codes contains also the lower spreading factor codes if subsets are formed. The OVSF principle allows to accommodate a number of orthogonal code channels of different spreading factors in the same band and time slot [4].

## 8.2 Forward link

The generic form of the forward link spreader and modulator is shown in Table 8-1. Except for the common pilot channel (PI-CCPCH), different configurations of spreading and randomization codes may be applied. Since the same randomization is applied to all simultaneously transmitted forward link channels, summation is prior to randomization.

QPSK or dual BPSK and real randomization for all DPCH and CPCH is used on the forward link. Real randomization is adequate for the forward link requiring minimum complexity in the UTs receiver.

The use of dual BPSK with real randomization would reduce the number of orthogonal code channels to one half, since different channelization codes have to be applied to the I- and Q-branch. Single channelization code dual BPSK with I/Q independent randomization could be an alternative requiring only one half of the channelization codes thus providing the same number of code channels as QPSK. For the time being, its impact on receiver design and on its performance in case of lower spreading factors where increased I-Q cross talk is expected is not clear.

Tthe slightly more robust dual BPSK with real randomization is employed for the synchronization burst (HP-CCPCH).

The PI-CCPCH is mapped on channelization code#0 which is the all '1'- sequence. The PI-CCPCH data is simply an endless sequence of '1's. Thus, the PI-CCPCH is the randomization code itself.

Specific gains may be assigned to each DPCH or CPCH. This is however not shown in Fig. 8-1. The selection and assignment of randomization codes is treated in section 9.4.4. A square root raised cosine chip pulse shaping is applied. The resulting spreading modulation per user channel is SRRC-filtered QPSK.synchronization.

### 8.3 Return link

The generic form of the forward link spreader and modulator is shown in Fig. 8-2. Different configurations of spreading and randomization codes may be applied as on the forward link.

Either QPSK or dual BPSK data modulation both with complex randomization is applied for the return link DPCH. The slightly more robust dual BPSK with complex randomization is applied to the random access burst (RAPCH).

In contrast to the forward link, □/4-QPSK spreading modulation is used to provide lower envelope fluctuation. A square root raised cosine chip pulse shaping with roll-off factor $\alpha$ = 0.22 as defined for the terrestrial UMTS [1] is adopted.

The linear □/4-QPSK modulation may be approximated by a non-linear modulation scheme using controlled enevlope dynamic compression providing lower envelope fluctuation than the original □/4-QPSK scheme. The potential gain with a low envelope ripple modulation scheme is the use of a more power efficient amplifier, which can lead to a higher peak output power capability, longer battery life, and smaller heat sinks mainly for handheld terminals. Although there is some performance loss in the order of 1 dB in a linear □/4-QPSK BS receiver, there may be an overall gain of 1 — 2 dB. Satellite applications are particularly well suited to this type of approach due to the lower significance of adjacent channel interference and the higher power requirements.

### 9. System Aspects

### 9.1 System Architecture

The underlying system architecture of a UMTS satellite access network (USRAN) is assumed to be as follows:

Several base stations (BS) communicate with a potentially large population of UTs communicating through a constellation of satellites. Feeder links connect the BSs to the satellites, and service links connect the satellites to the UTs. Each BS serves a group of UTs located in its service area.

Both, quasi-linear transparent or regenerative transponders are assumed for the satellite. The satellite is equipped with multi-spot beam transmit and receive antennas (examples are given in chapter 10) or with digital beam forming antennas adaptable to a user. In case of fixed beam antennas, the forward and return link spot beams are assumed to coincide.

### 9.2 Spectrum Requirements

The terrestrial UMTS requirement of a minimum bandwidth of two times 5 MHz to be operable, is also adopted for the satellite UMTS. A 100%-re-use of the carrier frequencies for all satellites of a constellation belonging to the same USRAN is therefore envisaged.

### 9.3 Power Control

Closed loop power control on the forward and return link is assumedto partly compensate link loss variations to individual UTs reducing interference resulting from excess link margins.

Closed loop power control may be applied to all dedicated physical channels of a two-way stream mode transmission, but not to common control physical channels and to infrequent packet data transfer without dedicated channel assignment (ref. section 6.5). This fact has to be considered if the common pilot channel (PI-CCPCH) is used to assist demodulation of a power controlled dedicated physical channel. Sufficient link margins have to be provided for the PI-CCPCH.

The long round trip delays associated to satellite links do not permit fast acting closed loop power control (max. 23.4 ms in the assumed LEO system and 204 ms for the HEO system). In a LEO system it would be sufficient to transmit one power control command per frame.

Open loop power control could be useful to compensate for weak shadowing as caused by trees but not always to mitigate multipath fading. A bounce path off the ground may produce an echo with a relative delay in the range of 2 to 10ns, assuming a user terminal antenna 1.5 m above ground. The corresponding fading decorrelation frequency spacing would be in the range of 50 to 250 MHz. Assuming a duplex spacing of 190 MHz (Table 4-1), sufficient fading correlation between forward and return link therefore cannot always be guaranteed. Open loop power control therefore seems to be unreliable.

### 9.4 System Base Synchronization

### 9.4.1 System time and frequency reference

It is assumed that system time and frequency reference is virtually located in the satellite. This means, that the signals emitted by the satellite correspond to the nominal frequencies and timing. In a satellite system using a transparent satellite, this is accomplished in the following way:

In case of a linear transponder, the BS offsets the transmit times, frequencies, chip rates etc. of its feeder up-link so that the signals arrive at the intended satellite in synchronism with the nominal system time and frequency, aside from beam specific time shifts and Doppler precompensation which may be additionally applied for the service links. This implies that the BS knows the exact position and velocity of the satellite in use, such that it may calculate Doppler shift and propagation delay.

This is called full feeder uplink Doppler precompensation. Full feeder link pre-compensation requires variable delay units, variable clock and carrier frequency oscillators in the BS. The delay units are adjusted in a manner complementary to the varying delay of the feeder such that a constant overall delay results.

The BS controls timing of the individual UTs such that the return link signals arrive at the intended satellite in quasi-synchronism with the nominal system time and frequency, aside from beam specific time shifts and frequency offsets which may be additionally applied for the service return links.

The feeder down link needs no specification in this context, since feeder propagation time vanes for all beams exactly in the same manner.

### 9.4.2 Intra-satellite inter-beam synchronization

Frame structure and the start of a multi-frame of all beams of the same satellite are quasi time aligned in the forward as well as in the return link. There will be small intentional and fixed time offsets between two adjacent beams in the order of a few chip periods to decorrelate inter-beam interference (ref. section 9.4.2). The SW, for instance, which is transmitted at the beginning of a multi-frame in frame#0 and slot#1, is transmitted quasi-simultaneously in all beams of a satellite.

Both forward and return link multi-frames of two adjacent spot beams of the same satellite are time offset from one another by one of the following numbers of chip periods $N_{off}$, $2 * N_{off}$, $3 * N_{off}$, where $N_{off}$ = 8. A 1-in-4 re-use pattern is applied.

In general, there will be a fixed offset between the forward and return link multi-frame at the base station, while this offset at the UT side in general changes with time and geographical location of the UT.

This approach has the following advantages:

- It simplifies forward link acquisition of an UT

- It simplifies adjacent beam interference mitigation techniques

synchronizationsynchronizationThis means asynchronous traffic would interfere with asynchronous traffic, synchronous with synchronous traffic, and high penetration paging with high penetration paging.

### 9.4.3 System-wide inter-satellite synchronization

The multi-frames of all satellites belonging to the same USRAN are quasi-time aligned to one another within an accuracy in the order of 1 ms. In case of linear transponders and no inter-satellite links, the system-wide synchronization may be maintained by the BSs located in fixed earth stations interconnected via a terrestrial network or by using GPS. This time alignment limits multi-frame time differences between co-coverage satellites to the minimum possible. This is advantageous for satellite path diversity and satellite hand-off, however, not strictly necessary.

### 9.4.4 Service Link Doppler frequency precompensation and Broadcasting

In addition to feeder uplink Doppler precompensation, the BS, knowing the position of the satellite in use, may also precompensate the service forward link carrier frequency so that zero Doppler shift ideally results for a non-moving observer on the earth's surface located at the beam center point (ref. section 10.2). In contrast to the feeder up-link, only the carrier frequency Doppler is precompensated, but not the chip clock frequency, in order not to contradict with the requirement stated in section 9.4.2.

The BS indicates on a primary CCPCH if the carrier frequency Doppler is precompensated or not, and in any case, it indicates the calculated instantaneous Doppler shift associated to the beam center point which may be precompensated or not.

The BS also indicates the calculated path delay associated to the beam center point.

The maximum deviation of the actual Doppler carrier frequency shift from the Doppler at the beam center point which may occur inside a beam are listed in Table 10-2 (relative Doppler shifts) for all satellite constellations considered.

Carrier Doppler frequency precompensation may simplify initial forward link acquisition of the UTsynchronization.

## 9.4.5 Randomization Codes

The purpose of the overlaid randomization of the chanelization code is to decorrelate inter-beam and inter-satellite interference.

The following generic randomization approach is chosen:

1. One satellite specific and one common randomization code sequence (real randomization) is assigned to each satellite belonging to the same USRAN to be used on the forward link.

2. A satellite specific pair of randomization codes (complex randomization) is assigned to each satellite belonging to the same USRAN to be used on the return link.

3. The satellite specific forward link randomization code is unique in the USRAN and is applied to all forward link transmissions of all beams of the same satellite (except the synchronization burst (HP-CCPCH)).

4. The satellite specific pair of return link randomization codes is unique in the USRAN and is applied to all quasi-synchronous and asynchronous return link transmissions of all beams of the same satellite.

5. The common randomization code is applied to the forward link synchronization bursts (HP-CCPCH) of all beams of all satellites belonging to the same USRAN.

6. The start of the satellite specific and common randomization code refers to the first chip of a time slot for both forward link and quasi-synchronous return link.

7. In case of asynchronous traffic, the start of the randomization code sequences of the satellite specific pair refers to the first chip of the random access burst.

The length of the forward link and quasi-synchronous return link randomzsation code sequences is equal the length of a time slot. The length of the randomization code sequence used for the random access burst is equal the length of the random access burst. The different randomization codes required may be chosen as different epochs from a long m-sequence generated by a linear feedback shift register.

Since transmissions to adjacent beams are shifted by small offsets, adjacent beam interference appears randomized. A unique randomization code on each satellite avoids accidental derandomization of inter-satellite interference in any situation which may occur in a multiple satellite scenario.

The use of a common randomization code for the synchronization bursts simplifies forward link acquisition and allows decoding of the HP-CCPCH with minimum system information.

Accidental interference derandomization in case of HP-CCPCH reception is unavoidable with this approach. In order to lower the probability of acquisition failures or paging message losses in the path delay co-incidence zones occurring in a multiple satellite scenario, the transmit power during the synchronization burst may be varied with time by approx. 6 dB in a manner such that only one of the serving satellites transmits at full power at a time. Power variation would be applied only in those beams covering the delay co-incidence zones. This approach may be of particular importance in a geostationary satellite system where delay co-incidence zones do not move.

## 9.5 Forward Link Acquisition and Synchronization

The following describes a possible forward link acquisition and synchronization procedure by an UT:

1. The UT initially acquires the forward link synchronization (time and frequency) by using the periodic SWs transmitted in slot#1 of frame #0. The spread SW has a length of 32*64=2048 chips (32*32=1024 chips in the 2.048 Mcps option) and is common to all beams and satellites.

2. If several SWs from different beams or satellites are detected during a certain observation period, it chooses the one associated to the largest correlation peak to establish frequency, chip, symbol, slot, and frame synchronization.

3. The UT uses the common pilot channel (PI-CCPCH) to extract the randomization code specific to the particular satellite by correlating the receive signal against all possible randomization sequences used in the USRAN. (Once having established preliminary synchronization, this should be relatively easy to perform.)

4. The UT attempts to further improve time and frequency synchronization using the PI-CCPCH.

5. The UT reads the BCCH information transmitted on a P-CCPCH in frame#0 to acquire all relevant high level synchronization and system information.

## 9.6 Return Link Synchronization Acquisition

### 9.6.1 Initial access and return link synchronization acquisition

The following describes a possible procedure for initial access and return link synchronization acquisition and tracking:

1. The UT is allowed to access the BS only after having successfully established forward link synchronization.

2. The UT reads the information about the instantaneous Doppler frequency shift and path delay valid at the beam center point broadcast by the BS in frame#0.

3. The UT applies Doppler precompensation and timing advance, such that the random access burst is received with minimum Doppler shift and timing error at the satellite within the asynchronous traffic frame. The UT therefore computes frequency precompensation and burst timing to be applied on the return link using information gathered on the forward link.

4. The UT transmits the precompensated random access burst in frame#0 at the computed time instance. The computed timing of the random access bursts may be additionally slightly randomised to avoid interference "hot spots" in the asynchronous traffic frame. However, these offsets have to be indicated in the content of the random access burst.

5. If the BS has successfully captured the random access burst, it estimates time and frequency (measures residual timing and frequency errors) and sends a channel assignment, as well as timing and frequency corrections to the UT using a CCPCH. The BS receiver will utilise the SW transmitted with each random access burst as a synchronization aid. The spread SW has a length of 1024 chips and is common to all users of all beams of a satellite. However it is different for different satellites.

6. Upon successful reception of the forward link message, the UT corrects its Doppler precompensation and chip timing and starts to transmit bursts in the assigned time slots within the quasi-synchronous traffic frames. The return link transmission may now be considered as quasi-synchronous to other traffic arriving at the BS. The return link may now be considered as "fully Doppler precompensated" with respect to carrier frequency and chip clock.

7. The UT continuously tracks the forward link carrier frequency and chip timing and corrects return link carrier frequency and chip timing upon reception of TFC commands continuously sent by the BS.

### 9.6.2 Synchronization Reacquisition Procedure

Recognising that the precise synchronization required may occasionally be lost (e.g. caused by shadowing), a synchronization reacquisition procedure is also defined in order to quickly restore synchronization.

A loss of synchronization may be indicated at the BS or the UT by the fact that the BER measured over a number of received bursts exceeds a certain threshold. In case of synchronization loss the BS may initiate a reacquisition procedure. The reacquisition procedure is similar to the forward and return link acquisition procedure and is proposed as follows:

1. The BS requests a reacquisition using a dedicated logical control channel soon after it has lost return link synchronization.

2. On reception of the reacquisition request or on local synchronization loss indication, the UT immediately stops transmitting traffic and, if necessary, tries to reacquire forward link synchronization. The use of the common pilot may be sufficient for this purpose.

3. In any case, the UT sends a reacquisition message only upon request by the BS using the random access burst. Since timing uncertainty may be assumed to be smaller compared to the initial access case, special portions closed to the edges of the asynchronous traffic frame having lower congestion may be used for this purpose.

4. After having restored full synchronization, the BS continuous to send TFC commands to track the return link synchronization.

### 9.7 The Quasi-Synchronous/Quasi-Orthogonal W-C/TDMA Return Link

Synchronous operation of CDMA with respect to carrier frequency and chip timing permits orthogonal partitioning of resources within a satellite spot beam reducing self noise. An almost perfect orthogonality can easily be achieved on the forward link (point to multipoint) at each UT, since different user channels are equally affected by Doppler and delay (in the absence of multi-path). In contrast, return link transmissions (multipoint to point) normally have different origins, thus exhibiting different Doppler and delays when received by the BS.

Signal orthogonality at the BS receiver can only be achieved by using a feedback control loop, whereas control information is sent to the UT. In a real system, impaired by channel noise, there will be a residual synchronization error. The return link is therefore said to be quasi-synchronous/quasi-orthogonal. It has to be noted, that both carrier frequency and chip time must be controlled by the BS in order to preserve orthogonality between different users.

Considering multi-satellite coverage, only a portion of the UT population will be synchronised to the BS associated to a particular satellite in the general case (those which are assigned to that BS ). The return link signals of the remaining UTs of the population, assigned to BSs associated to different satellites, arrive asynchronously at the particular BS receiver.

The feasibility of a quasi-synchronous return link mainly depends on the following aspects:

- the maximum Doppler frequency drifts (rate of change) which may occur in the satellite orbit considered
- the round trip delay limiting the tracking speed of a delay and frequency locked loop
- the return link synchronization accuracy required by a particular BS receiver which is depending of the chip rate used by the system.

A W-C/TDMA return link is said to be quasi-synchronous, if the standard deviation of the synchronization error is in the order of fractions of a chip duration (e.g. 0.1 chip period) such that intra beam interference due to code channel spillover is low, assuming conventional single-user detection without interference mitigation.

Conversely, if the standard deviation of the synchronization error is higher, then the W-C/TDMA return link may be called partially-synchronous. In this case more sophisticated multi-user detection or interference mitigation schemes would have to be employed in the BS to reach user capacity of a quasi-synchronous system.

One major criterion for the feasibility of a quasi-synchronous return link is the maximum loop outage time. It is defined here as the time period an outage of the feedback control loop (by shadowing) may last, until the return link synchronization error $\varepsilon$ either with respect to chip time or carrier frequency has exceeded a specified maximum value $\varepsilon_{max}$ in the worst case conditions occurring in a particular satellite orbital system. For a circular orbit, the position where the Doppler drift is maximum may be assumed as the worst case position. Maximum Doppler drift occurs when the relative velocity between UT and satellite vanishes.

The maximum loop outage time gives an idea of the overhead caused by synchronization reacquisition procedures. If the loop outage time is short then synchronization reacquisition procedures may occur too often causing congestion in the asynchronous traffic frame. Moreover, the synchronization reacquisition procedure may considerably lengthen the effective link outage time compared to the true loop outage (shadowing) time.

Clearly, the maximum loop outage time achievable in a particular orbit system largely depends of the type of control loop employed. To a certain degree delay and frequency drifts are predictable. This a priori information may be exploited by the control system.

A delay locked loop (DLL) is normally employed to maintain chip synchronism within the tolerable error bounds. In a LEO with 1400 km altitude, chip time drifts up to 36 chips/s occur, demanding extremely fast DLLs. However, it has to be noticed that Doppler drifts due to radial acceleration of a LEO satellite are relatively small (0.1 ppm/s).

Carrier frequency control therefore appears to be uncritical.

Chip time drifts in non-geostationary orbit systems may be considered as the result of a relatively large chip clock frequency offset caused by the Doppler effect. This frequency offset varies however quite slowly in time. Thus, a control loop, which continuously tries to compensate the chip clock frequency error, would strongly diminish the requirements of a DLL. This is an important fact to know.

The following describes the principle of a combined carrier frequency and chip time control loop, which proved to perform sufficiently well in all type of orbits considered:

The BS sends periodically frequency and chip time correction data to the UT using the dedicated control channel (DCPCH) mapped to forward link bursts. On reception, the UT corrects carrier frequency, chip rate and chip time of its transmit signal accordingly. The BS measures chip time and carrier frequency errors in the received return link burst transmitted by the UT after correction. Then the BS computes the new correction data which in turn are transmitted to the UT using the DCPCH in a subsequent burst, a.s.o.Preferably the UT derives both chip clock and carrier frequency from the same local frequency reference and corrects carrier frequency and chip rate simultaneously by the same relative amount (percentage) using frequency control data sent by the BS.

In this case, the BS does not need to measure chip rate error and does not need to transmit extra data to the UT to control its chip rate. Moreover, correction data can be limited to the values —1, 0, +1 in order to keep DCPCH overhead as low as possible. The BS transmits the control value 0 if the measured error is within a specified tolerance interval, that means, the terminal should not change its frequency/timing. The BS transmits either the value 1 or -1 if the error falls outside the tolerance interval, which means that frequency/time has to be increased or decreased by one control step, respectively. This principle may be called a 3-point control loop. Its inherent non-linearity and its simplicity makes it robust to various kinds of disturbance occurring in a real system.

The average control information rate is in the order of 20 bit/s.

The principle further assumes that an error or at least signal quality detection is employed for control data transmission to prevent misguidance of the UT by erroneously received control data. That means control data received by the UT may be simply considered as either correct or not available. The latter case is called a loop outage. During a loop outage, the UT may behave in two ways:

- The UT performs slight corrections based on predictions

- The UT does not correct anything.

If the loop outage exceeds a certain time, the UT stops return link transmission.

### 9.8 F/TDD Mode Operation

The satellite W-C/TDMA scheme supports terminals operating in frequency/time division duplex mode.

An UT operating in frequency/time division transmits and receives signals in separate time periods and on separate carrier frequencies but never at the same time. SuchUTs require less performing and bulky diplexers at the antenna port.

In contrast to terrestrial networks, the propagation time in non-geostationary satellite system may vary significantly inside the footprint of a beam during a session. The BS controls the return link transmissions such that there is a fixed timeoffset between the forward and return link multi-frame structure as observed at the BS (ref. section 9.4.2).

While a fixed return link frame time is maintained at the BS, the return link frames continuously drift relative to the forward link frames for an observer at the UT when the path length changes. In the worst case beam of the LEO system considered, the frame time offset may vary in a range of up to approx. 12 ms. (This is twice the path delay variation within the footprint of the furthest beam in the orbital plane as indicated in Table 10-2 for the LEO system).

The relative frame drift as observed by an UT operating in F/TDD mode implies the requirement of slot reassignments from time to time, in order to prevent a transmit/receive conflict. The extra overhead for channel reassignments as needed for the F/TDD mode operation is however relatively small. This is shown in the following for the LEO system as described in section 10.1 as an example:

In the LEO system, the maximum relative time drift between forward and return link frames occurs in the footprint of the furthest beam in the orbital plane and amounts to approx. 37 μs/s (Table 10-2, twice the delay drift). Allowing some guard time for transmit/receive switching and assuming a forward and return link burst length of 2 slot periods (maximum length to be supported in F/TDD mode), the maximum possible clearance between transmit and receive periods may be 3 slot periods. A slot channel reassignment would be required each time the return link burst has drifted over that period which corresponds to approx. 185 s. The dwell time in the furthest beam amounts to 356 s which is of similar order.

### 9.9 Multi-Beam/Multi-Satellite Scenarios

### 9.9.1 Interference considerations

For any satellite system considered in chapter 10, providing global coverage, there must be certain zones, which are covered by beams of at least two different satellites. Overlapping coverage zones are the result, if full coverage (without gaps) in an area being larger than the service area of a single satellite, is to be provided at any time. Despite the fact that macro path diversity may be exploited, multi-satellite coverage exhibits a severe drawback which is the general increase of interference, if 100% frequency re-use is targeted.

In case of single satellite coverage, the dominant interference in a synchronous W-C/TDMA system with 100% frequency and channelization code re-use, is the inter-beam interference, due to antenna beam overlapping.

Multi-satellite coverage adds further interference if 100% frequency re-use is assumed and if users are assigned to different satellites. This is because the different path delays do not allow orthogonal partitioning of the common resources of several satellites. In overlapping coverage zones, system user capacity of the synchronous W-C/TDMA is therefore expected to be lower than in a single satellite coverage case. It can be shown, however, that user capacity of a multi-satellite system may be significantly increased using maximal ratio path diversity techniques or interference mitigation techniques.

### 9.9.1.1 Forward link

Considering the forward link, the UT receives the desired signal from the serving satellite and in general interference components from a few beams of the same and of one or two other co-coverage satellites. In the following a forward link interference signal is defined to be the forward link sum signal emitted into an adjacent beam of the same satellite or into a beam of a co-coverage satellite. Each interference signal consists of a superposition of a number of chip and frame synchronous forward link transmit signals (code channels). The following interference signals have to be considered:

- Inter-beam interference of the serving satellite: These interference signals are chip synchronous relative to the desired signal, but have slight fixed offsets (ref. section 9.4.2) relative to each other and relative to the desired signal with respect to the frame structure.

- Inter-beam/inter-satellite interference: The frame structure of interference signals originated from beams of another satellite differ by small fixed offsets (ref. section 9.4.2). However, they are mutually chip synchronous. Interference signals originating from different satellites are generally asynchronous relative to the desired signal.

This is the situation, an UT receiver will encounter in a multi-satellite scenario.

### 9.9.1.2 Return link

Now considering the return link, the BS receives the desired set of mutually quasi-synchronous/quasi-orthogonal return link signals originating from all of its users located in the beam service area. In addition, it receives interference signals of a multitude of users assigned to the same or to co-coverage satellites weighed according to the radiation characteristic of the antenna. The following interference signals have to be considered on the return link:

- Inter-beam multiple access interference: These signals are quasi-synchronous relative to the chip timing of the desired signals, but have a slight known offset (ref. section 9.4.2) with respect to the frame structure.

- Inter-beam/inter-satellite interference: Interference signals originating from UTs assigned to other satellites generally arrive asynchronously, since these UTs are synchronized to other co-coverage satellites haying different path delays.

This is the situation, a BS receiver has to cope with in a multi-satellite scenario. The grade of synchronization (structure) in the sum interference signals is lower on the return link than on the forward link. Therefore, more sophisticated interference mitigation techniques are expected to be employed by the BS receiver to increase the return link capacity.

### 9.9.2 Satellite path diversity

In a multi-satellite scenario satellite macro path diversity may be exploited. In a satellite diversity system the USRAN uses more than one satellite to serve an UT.

The benefit of satellite path diversity using coherent signal combining techniques is threefold. First there is the classical diversity gain , second it increases link reliability in the presence of blockage by obstructions, and third soft inter-satellite hand-off is inherent.

It is known that signal strength fluctuations are remarkably lower for satellite links (Rician fading) than they are for terrestrial links (Rayleigh fading). With respect to multipath fading only, the system efficiency gains achievable with classical maximal ratio diversity combining techniques are less attractive in satellite system than they are for terrestrial systems.

Satellite path diversity on the forward link means, that a user dedicated signal has to be transmitted by more than one satellite, thus requiring more satellite power. Apart from multi-path fading and shadowing mitigation, no diversity gain is therefore expected in terms of power efficiency or user capacity on the forward link.

This in contrast to the return link, where signals originating from the same UT may be received via several co-coverage satellites and combined coherently. It can be shown, that exploitation of satellite path diversity in the satellite W-C/TDMA scheme with a quasi-synchronous/quasi-orthogonal return link may increase return link user capacity with an increasing number of satellites. In the following exploitation of return link macro path diversity in a multiple-satellite coverage scenario using the satellite W-C/TDMA scheme with quasi-synchronous return link is described:

Satellites with a linear transponder are assumed. There is one satellite associated to each BS in the USRAN. This satellite is called the primary satellite. The assignment of primary satellites to BSs in a non-geostationary orbit system will be dynamic. For the return link reception of a particular UT, the BS may access other supporting co-coverage satellites associated to other BSs, called secondary satellites. These satellites will be connected via separate feeder links to the BS.

There is a BS receiver available for each beam of a satellite. Each BS receiver is a multiple input receiver performing quasi-coherent demodulation of all input signals. The demodulated signals are combined in the sense of maximal ratio diversity combining, this means the demodulated signals are weighed according to their signal-to-noise/interference ratio prior to summation. One input is used for the return link signal received via the primary satellite. The other receiver inputs may be used for return link signals received via secondary satellites.

Each UT is assigned to one of the BSs of the USRAN. The group of UTs assigned to the same BS are forming a quasi-synchronous group. The subgroup of UTs assigned to the same BS beam receiver is called an orthogonal subgroup. This means, all UTs belonging to a quasi-synchronous group are individually controlled by their BS in a manner such that all return link transmit signals received via the primary satellite are mutually quasi-synchronous and those which are belonging to the same orthogonal subgroup are additionally quasi-orthogonal at their BS beam receiver input.

In a multiple satellite coverage scenario, the BS may decide to combine the return link signals of a particular UT received via the primary and the secondary satellites through the corresponding beams to improve the signal-to-noise/interference ratio (ref. to Fig. 9-1).

It has to be noticed, that resulting signal-to-interference ratios (SIR) of a particular UT at the different BS demodulator outputs of a BS beam receiver are generally different. The highest SIR is expected at the demodulator output associated to the primary satellite, which is called the primary BS demodulator. This is explained by the fact, that the portion of UTs belonging to the orthogonal subgroup of the particular UT produces virtually no interference. Interference received via the primary satellite mainly originates from UTs belonging to other orthogonal subgroups of the same BS (adjacent beams) or to other quasi-synchronous groups of co-coverage satellites (ref. Section 9.9.1).

A different interference situation is observed at a secondary BS demodulator. The wanted signal of the particular UT received via a beam of the secondary satellite is interfered by any other UT located in the beam coverage zone resulting in a lower SIR. Although a portion of these unwanted UTs belong to the same orthogonal subgroup, their receive signal appear asynchronous (which destroys orthogonality) at the secondary BS demodulator, due to path length differences, thus also causing interference.

In spite of these SIR inequities between primary and secondary BS demodulator output, it can be shown, there is a substantial gain from maximal ratio combining which may increase user capacity of the return link.

The more co-coverage satellites are involved, the smaller the SIR differences between primary and secondary BS demodulator outputs become. The benefit of a quasi-synchronous return link therefore vanishes with an increasing number of co-coverage satellites. This means user capacity converges to that of asynchronous CDMA, which also increases with an increasing number of satellites.

### 9.9.3 Inter-satellite beam hand-off

In a non-geostationary orbit satellite system, the service areas of the satellites are continuously moving. In a service area of a satellite beam, there will be a group of users, forming an orthogonal subgroup synchronized to the BS receiver of that beam. Since the beam footprint moves, members of that orthogonal user group are continuously changing. There will be new coming UTs joining the group and UTs which are leaving this group.

In a multiple-satellite coverage scenario, there will in principle be multiple choice to assign an UT to an orthogonal group. However, since the primary satellite whose BS controls the UT is of living importance for an UT, it is reasonable to chose the satellite with highest elevation angle as primary satellite (the higher the elevation angle, the lower the risk to be obstructed).

If there should be no line-of-sight to the satellite with highest elevation angle, an other co-coverage satellite may be chosen as primary satellite. A reassignment of an UT to the BS of another co-coverage satellite is called an inter-satellite beam hand-off.

In UT mobile operation, sudden blockage may occur e.g. by buildings. In those cases, a fast satellite hand-off, initiated by the UT, is required. Methods for satellite hand-off are described in the following:

To be ready for a hand-off procedure, the UT may frequently monitor other co-coverage satellites, also searching for new ones. In case of loss of primary satellite, the UT tries to access the co-coverage satellite with best conditions using the initial access procedure described in section 9.6.

If ultra-fast seamless hand-off is demanded, a UT may try to maintain an idling link to the BS of a secondary satellite for synchronization and power control purposes. This special transmission mode of the satellite W-C/TDMA scheme is called secondary link maintenance and is of particular interest in higher altitude orbit systems (MEO, HEO,GEO) having lower Doppler drift.

Secondary link maintenance requires the UT to operate in F/TDD mode, such that it is capable to transmit and receive data to and from a secondary satellite, respectively, between the primary transmit and receive periods. On the return link, access bursts containing secondary link maintenance data are sent from time to time to the BS of the secondary satellite. The BS uses a dedicated control channel to send secondary link maintenance data to the UT. Random access bursts have to be timed such that they are received within the asynchronous traffic frame of the secondary satellite. Using this synchronization maintenance, the UT will be prepared to change to another satellite in a relatively short time.

### 9.9.4 Intra-satellite beam diversity and hand-off

When an UT is moving towards the edge of a beam footprint, the SNR of the signal received in the beam drops, while it raises in an adjacent beam. This is due to the roll-off of the antenna gain characteristic. During the passage of an UT over a transition zone, the BS may therefore combine the demodulator output signals of two or three adjacent beams to partially compensate the loss in SNR. (A hexagonal beam pattern is assumed.) Although, there will be in general an inequity in SIR between the different beam demodulator outputs, a diversity gain is expected, when maximal ratio combining is employed.

There is a point in the transition zone, where the UT has to be reassigned to another beam or say to another orthogonal subgroup. This reassignment requires the UT only to change its channelisation code and to offset its transmission timing. A synchronization reacquisition procedure is however not needed, because the UT stays in the same quasi-synchronous group, which should always enable a seamless intra-satellite beam hand-off.

### 10. Satellite Constellations, Delay and Doppler Variations

### 10.1 Parameter Assumptions for Different Satellite Systems

Five different orbit systems are defined for evaluation purposes. The relevant system parameters are listed in Table 10-1.

"LEO"             stands for a system similar to Globalstar™ [5, 6]. A 19-beam antenna is assumed which is different to Globalstar™.

"Ellipso Borealis"   stands for a system similar to Ellipso™ [7].

"MEO"             stands for a system similar to ICO™ [5].

"HEO"             stands for a system similar to Archimedes.

"GEO"             stands for a system with a multi-beam antenna similar to Thuraya™ [5].

| | | LEO | Ellipso Borealis | MEO | HEO | GEO |
|---|---|---|---|---|---|---|
| Orbit type | | circular | elliptical [2) | circular | elliptical | circular |
| Orbit height | km | 1414 | | 10355 | | 35786 |
| Apogee | km | | 7846/7846 [1) | | 26784 | |
| Perigee | km | | 520/4223 [1) | | 1000 | |
| Orbit inclination | deg | 52 | 116.6 / 0 [1) | 45 | 63.4 | 0 |
| No of orbits | | 8 | 2 / 1 [1) | 2 | 6 | 1 |
| No of satell. per orbit | | 6 | 4 / 6 [1) | 5 | 1 | 4 |
| Hand-off altitude | km | — | 7303 | — | 20500 | — |
| Min. elevation angle | deg. | 10 | 20 | 10 | 40 | 20 |
| Footprint diameter | deg. | 53 | 102 [3) | 116 | 120 [3) | 143 |
| | km | 5850 | 11340 | 12900 | 13380 | 15900 |
| No of spot beams | | 19 | 61 | 169 | 61 | 160 |
| Beam width | deg. | 21.5 | 5.5 | 2.9 | 2.3 | 0.94 |
| payload type | | trans-parent | transparent | trans-parent | trans-parent | On-board processing |
| Feeder-link Doppler pre-compensation | | full | full | full | full | not relevant |

**Table 10-1** Satellite constellations and system assumptions

**Notes:** 1) inclined / equatorial orbit.

2) in contrast to all other constellations, counter earth-wise revolution is assumed on all orbits

3) at apogee

## 10.2 Path Delay and Doppler for Different Satellite Systems

The relevant slant ranges, propagation delays and Doppler shifts and drifts for all orbital systems are listed in Table 10-2.

With the exception of the GEO the same slant ranges and slant range variations are assumed for the service and for the feeder link. In the GEO case, the minimum slant range is always assumed for the feeder link. For the Doppler calculations, earth rotation is taken into account. For LEO, MEO and HEO orbits, earth-wise revolution and for the Ellipso system counter-earth-wise revolution is assumed.

Values relative to the beam center point (BCP) mean the difference between the actual value and the value expected at the beam center point. These offsets from the values at beam center point are relevant, if, for instance, the BS pre-compensates the beam center point Doppler or if the BS timing control refers to the beam center point.

The beam center point is defined as the point where the centroidal line of the beam cone intercepts with the earth surface. Notice, this definition is chosen for simplicity reasons. For the outer beams of a cluster it does not correspond to the centroid of the beam footprint as it would be seen and defined from the earth center (ref. to **Fig.A.1-2**).

For the elliptical orbit systems, Doppler calculations refer to the orbit segment where the satellite is active (segment between ascending and descending hand-off point).

The furthest beam designates the beam at the fringe of satellite coverage whose center axis lay in the orbital plane. The closest beam designates the beam whose center axis intercepts the earth surface at the subsatellite point.

The dwell time is defined for a stationary UT situated on the earth surface in the orbital plane.

| | | LEO | Ellipso Borealis | MEO | HEO | GEO |
|---|---|---|---|---|---|---|
| Max. slant range | km | 3504 | 11446 | 14402 | 30526 | 39555 |
| Min. slant range | | 1414 | 7303 | 10355 | 20500 | 35786 |
| Slant range variation | km | 2090 | 4143 | 4025 | 10026 | 3769 |
| Max. prop. delay (service link) | ms | 11.7 | 38.2 | 48 | 101.8 | 131.9 |
| Min. prop. delay (service link only) | ms | 4.7 | 24.05 | 43.5 | 68.4 | 119.3 |
| Delay variation (service link only) | ms | 6.95 | 14.1 | 13.4 | 33.4 | 12.6 |
| Max. prop. delay (feeder link incl.) | ms | 23.4 | 76.3 | 96 | 203.5 | 251.2 |
| Min. prop. delay (feeder link incl.) | ms | 9.4 | 48.1 | 87 | 136.8 | 238.6 |
| Delay variation (feeder link incl.) | ms | 13.9 | 28.2 | 26.8 | 66.7 | 12.6 |
| Slant range at BCP of furthest beam | km | 2170 | 6446 [3] | 13198 | 29276 [3] | 38826 |
| Slant range variation relative to BCP within furthest beam | km | + 1333<br>- 417 | + 1434<br>- 713 [3] | + 1204<br>- 654 | + 1250<br>- 760 [3] | + 728.4<br>- 533.8 |
| Delay at BCP of furthest beam [1] | ms | 7.25 | 33.4 [3] | 44.0 | 97.6 [3] | 129.4 |

| Delay variation relative to BCP within furthest beam | ms | + 4.45 −1.4 | + 4.8 [3] − 2.4 [3] | + 4.0 [3] − 2.2 | + 4.2 [3] − 2.5 [3] | + 2.4 − 1.8 |
|---|---|---|---|---|---|---|
| Doppler range | kHz | +/- 36.6 | +/- 20.0 | +/- 10.3 | +/- 14.6 | 0 |
| Delay drift range | $\mu s/s$ | +/- 18.3 | +/- 10 | +/- 5.2 | +/- 7.3 | 0 |
| Doppler drift range | Hz/s | +/- 179 | +/- 6.2 | +/- 4.1 | +/- 2.5 | 0 |
| Doppler range relative to BCP | kHz | +/- 8.47 [2] | +/- 1.32 [4] | +/- 0.7 [2] | +/- 0.26 [4] | 0 |
| Doppler drift range relative to BCP | Hz/s | +/- 179 | < 6.2 | +/- 4.1 | < 2.5 | 0 |
| Max. dwell time within closest beam | s | 97 | ≈720 | 334 | ≈9500 | ∞ |
| Max. dwell time within furthest beam | s | 356 | ≈1040 | 1258 | ≈9870 | ∞ |

**Table 10-1** Slant ranges, propagation delays and Doppler shifts

**Notes:**  
    1) service link only  
    2) for closest beam  
    3) at apogee  
    4) at hand-off point

**References**

[1] ETSI, "UMTS series on UTRA physical layer", ETSI SMG2/UMTS-L1 Technical Reports (TR), Nov. 1998.

[2] ITU-R, "Framework for the Radio Interface(s) and radio sub-system functionality for International Mobile Telecommunications-2000 (IMT-2000)", ITU-R M.1035 Recommendation, 1994

[3] Toskala, A., et al.,"FRAMES FMA2 Wideband-CDMA for UMTS",

EP 1 091 506 A2

[4] Adachi, F et al., "Tree Structured Generation of Orthogonal Spreading Codes with Different Length for the Forward Link of DS-CDMA", Electronics Letters, Vol.33, No.1, pp.27-28.

[5] Miller, B., "Satellites free the mobile phone", IEEE Spectrum, Vol.35, No.3, pp.26-35, March 1998.

[6] Hirshfield, E., "The Globalstar System - Breakthroughs in Efficiency in Microwave and Signal Processing Technology", Proc. of the AIAA/ESA Workshop on International Cooperation in Satellite Communications, Noordvijk, The Netherlands, pp.147-153, 1996.

[7] Evans, J.V. ,"New Satellites for Personal Communications", Scientific American, pp.60-67, April 1998.

**Claims**

1. Process for providing communication in a satellite system comprising at least one satellite with at least one service beam for radio communication between a base station and at least one terrestrial user terminal, said satellite transmitting base station signals in a forward link to said at least one user terminal and said user terminal transmitting user terminal signals in a return link to said base station via said satellite, characterized in that the base station transmits control information in the forward link to each of the at least one user terminals for enabling each user terminal to transmit its user terminal signals in the return link in a mode to reach signal arrival at the satellite that is quasi-synchronous with respect to a time and frequency reference in the base station enabling quasi-orthogonal code and time division multiple access.

2. Process according to claim 1, characterized in that said control information comprises frequency and time correction data enabling the user terminals to adjust their carrier frequency and chip timing for transmitting user terminal signals in order to maintain said quasi-orthogonal code and time division multiple access operation in the return link.

3. Process according to claim 2, characterized in that the frequency and time correction data comprises at least one ternary value for frequency and time correction each, a first value controlling the user terminal to a decrease the carrier frequency or chip time phase respectively, a second value controlling the user terminal to maintain the carrier frequency or chip time phase respectively and a third value controlling the user terminal to increase the carrier frequency or chip time phase respectively.

4. Process according to claim 3, characterized in that the user terminals are controlled to adjust carrier frequency in steps of a size that corresponds to a tolerance range of the carrier frequency synchronization loop which size is preferably about 0.05 ppm of the carrier frequency.

5. Process according to claim 3, characterized in that the user terminals are controlled to adjust chip time phase in steps of a size that corresponds to a tolerance range of the chip time synchronization loop which size is preferably about 1/10 of a chip duration.

6. Process according to one of claims 2 to 5, characterized in that the user terminal derives its carrier frequency and chip clock frequency from the same local frequency reference generator, and in that the user terminal corrects both the chip clock frequency and the carrier frequency by the same relative amount according to the frequency correction data sent to the terminal, and in that the user terminal corrects the chip time phase according to the time correction data sent to the terminal.

7. Process according to one of claims 1 to 6, characterized in that the control information is transmitted in a dedicated control channel during communication with the terminal.

8. Process according to one of claims 1 to 7, characterized in that the base station signals in the forward link are generated according to a time division multiplexing scheme and in that the user terminal signals in the return link are organized according to a time division multiple access scheme.

9. Process according to claim 8, characterized in that base station and user terminals are controlled to divide time into a plurality of frames, each frame having an identical duration corresponding to a value above the maximum round-trip delay variation as experienced inside the coverage area of any beam of any orbital system suitable for Satellite-UMTS.

46

10. Process according to claim 9, characterized in that the duration of the frame is approximately 20 ms.

11. Process according to claim 9 or 10, characterized in that nine frames are combined to a multi-frame consisting of eight ordinary frames for dedicated communication channels and one special frame for other purposes.

12. Process according to claim 11, characterized in that each frame is divided into eight identical time slots with the exception of the special frame of the user terminal signals in the return link, which is a non-slotted frame.

13. Process according to claim 11 or 12, characterized in that the user terminal uses the special frame in the return link to transmit asynchronous signals, in particular initial access signals, synchronization reacquisition signals, and connection-less packet mode data signals, and in that the base station uses the special frame in the forward link for control channels, in particular for common control channels, dedicated slow associated control channels, and in that the base station is able to transmit forward link connection-less packet mode data in said special frame of the forward link if there is transmission capacity.

14. Process according to one of claims 1 to 13, characterized in that the user terminal delays or advances its transmissions of an initial access signal or connection-less packet mode data signal in beams with lower round trip delay variations by a random time offset to avoid multiple access interference hot spots in the special frame and in that said time offset is indicated in said initial access signal or in said data signal such that it can be taken into account when computing the round trip delay in the base station.

15. Process according to claim 11, characterized in that synchronization reacquisition signals are transmitted in the return link special frame and in that said reacquisition signals are timed such that they arrive in edge zones of the special frame to minimize congestion.

16. Process according to one of claims 11 to 15, characterized in that the base station transmits synchronization information in a broadcast common control channel in said special frame of the forward link and in that said synchronization information comprises at least a path delay value and a Doppler frequency shift value, which are valid preferably for a beam center point of the service beam, enabling the user terminal to access the base station inside the time period of the special frame of the return link and with a minimum of Doppler frequency shift.

17. Process according to one of claims 1 to 16, characterized in that for simplifying beam hand-off in a satellite system with a plurality of service beams per satellite all forward link and dedicated return link transmissions associated to all beams of the same satellite are mutually quasi-synchronous within a predetermined tolerance range.

18. Process according to one of claims 11 to 17, characterized in that for simplifying satellite hand-off in a satellite system with a plurality of satellites the forward and return link frame structure as observed at the satellites is mutually partially-synchronous within a maximum tolerance range of 2 ms for all satellites belonging to the satellite system.

19. Process according to one of claims 1 to 18, characterized in that the base station signals are organized in an orthogonal code division multiplexing scheme and in that the user terminal signals in dedicated return link channels are organized according to a quasi-synchronous/quasi-orthogonal code division multiple access scheme, and in that the user terminal signals in non-dedicated return link channels are organised according to an asynchronous code division multiple access scheme.

20. Process according to claim 19, characterized in that in a satellite system with a plurality of satellites and a plurality of service beams per satellite different randomization codes are used in different satellites each randomization code being unique in the satellite system, and in that a single randomization code is used for all forward and return link transmissions in all beams of a satellite, and in that time shifted versions of said randomization code are used in different beams of the same satellite to decorrelate adjacent beam interference, said time shifts being smaller than 18 chip periods.

21. Process according to claim 19, characterized in that a single randomization code is used for a high penetration paging channel transmission in all satellites of the satellite system.

22. Process according to one of claims 1 to 21, characterized in that for providing frequency-time-division-duplexing communication with the user terminal a forward link channel and a return link channel are transmitted on different frequencies as well as in spaced apart time slots.

**23.** Process according to claim 22, characterized in that said time slots are separated by a predefined minimum time shift.

**24.** Process according to claim 23, characterized in that the space between the time slots in the forward and the return link is monitored and in that the time slots of the frequency-time-division-duplexing channels are reassigned if the space decreases below the predefined minimum time shift.

**25.** Process according to one of claims 22 to 24, characterized in that the terminal operating in frequency-time-division-duplexing communication (F/TDD mode) - while performing communication with a first base station associated to a primary satellite - maintains an idling link for synchronization and power control purposes to a second base station associated to a secondary satellite of the satellite system for performing a hand-off if communication via the primary satellite is lost, and in that the user terminal maintains said idling link by monitoring a dedicated control channel in the special frame of the forward link of the secondary satellite and by transmitting initial access signals or synchronization reacquisition signals in the special frame in the return link of the secondary satellite.

**26.** Process according to one of claims 11 to 25, characterized in that for transmitting a high penetration message a high penetration paging channel is allocated in a predefined slot within the special frame of the forward link, in that said slot is entirely devoted to said high penetration channel such that the total beam transmit power may be used for said high penetration channel providing high link margin.

**27.** Process according to claim 26, characterized in that said high penetration paging channel is allocated in four consecutive slots in the special frame every predefined multiple of a multi-frame, and in that high penetration paging messages are transmitted in a manner enabling the user terminal to employ signal combining methods over said four slots to further increase the link margin.

**28.** Process according to claim 26 or 27, characterized in that said high penetration paging message is transmitted only in a subgroup of beams comprising at least one beam of a satellite enabling to direct a big portion of the total satellite power into a small service area, and in that different subgroups of beams are used in a revolving manner if a user position is unknown.

**29.** Process according to claim 28, characterized in that said high penetration paging message is transmitted at least once each muti-frame at least in said predefined slot of the special frame and at least in said group of beams independent of a paging request, and in that said high penetration paging signal contains a synchronization word which is unique in the satellite system and is common to all beams of any satellite and to all satellites of the satellite system, said synchronization word also to be used by any user terminal to acquire forward link synchronization.

**30.** Process according to one of claims 1 to 29, characterized in that a linear square root raised cosine filtered $\pi/4$-QPSK is used for the return link transmissions, and in that pilot symbols are inserted according to a time multiplexing scheme avoiding parallel code i.e. code multiplex transmission to provide a return link transmit signal with relatively low envelope fluctuation and to enable the use of an approximation of said modulation based on a non-linear modulation scheme providing even lower envelope fluctuation for user terminals with high efficiency requirements.

**31.** Process according to one of claims 1 to 30, characterized in that in a satellite system with a plurality of satellites return link satellite path diversity is used, in that user terminal signals received via a primary and at least one secondary satellite are combined according to a maximal ratio combining method based on signal-to-interference/noise ratio estimates, in that the user terminal signal received via the primary satellite is combined with at least one signal from the same user terminal received via a secondary satellite, and in that the base station associated to the primary satellite controls the user terminal to be mutually quasi-synchronous within the user group assigned to the primary satellite.

**32.** Process according to claim 31, characterized in that in a satellite system with a plurality of service beams per satellite return link intra satellite beam diversity is used if the user terminal is located in a transition zone between adjacent sevice beams, in that user terminal signals received by the base station via a primary and at least a secondary beam are combined according to a method of maximal ratio combining based on signal-to-interference/noise ratio estimates, and in that the signal received via the primary beam is combined with at least one signal from the same user terminal received via at least one secondary beam.

**33.** A satellite communication system comprising:

a) a plurality of satellites for providing radio communication between a base station and at least one terrestrial user terminal;

b) each satellite defining at least one beam for transmitting radio signals in a forward link to said at least one user terminal and receiving radio signals in a return link;

c) in the base station means for determining the round-trip delay between the satellite and the user terminal and for transmitting control information for enabling the user terminal to transmit its user terminal signals in the return link in a quasi-synchronous mode;

d) in the user terminal means for transmitting user terminal signals in the return link to the satellite in said quasi-synchronous mode with respect to signal arrival at the satellite.

34. User terminal for a satellite system, comprising a high power amplifier designed for the use in satellite discontinuous F/TDD mode with relaxed linearity requirements but high peak power and for terrestrial continuous FDD mode with high linearity, but relatively low average power.

Multiframe
180 ms (= 9 frames)

| | frame 1 | frame 2 | frame 3 | frame 4 | frame 5 | frame 6 | frame 7 | frame 8 |

FL: Common control
RL: Asynchronous traffic

Frame
20 ms (= 8 slots)

| slot 1 | slot 2 | slot 3 | slot 4 | slot 5 | slot 6 | slot 7 | slot 8 |

2.5 ms

Fig. 6-1 Forward and return link frame structure

Asynchronous traffic frame
20 ms

Beam Center
arrival time

Random access burst
2.5 ms

| SW | RAPCH |

Fig. 6-2 Illustration of asynchronous return link traffic in frame#0.

Fig. 7-1 Generic coding and multiplexing scheme of the dedicated physical channel. (Number of bits (dibits) indicate the bits (dibits) multiplexed in one burst and refer to the case of the 2 Mcps option, the big burst, and no FCH bit repetition. The DPCH symbol rate refers to a spreading factor of 32.)

Fig. 8-1 Forward link generic spreader and modulator. (Rates indicated refer to the 2 Mcps option and a spreading factor of 32).

Fig. 8-2 Return link generic spreader and modulator. (Rates indicated refer to the 2 Mcps option and a spreading factor of 32).

satellite #2
secondary

satellite #1
primary

satellite #3
secondary

asynchronous CDMA

synchronous CDMA

asynchronous CDMA

fraction of users

User hotspot

user $k$

— other users (interferers)

Fig. 9-1